# EUROPEAN PATENT SPECIFICATION

(11) **EP 2 936 959 B1**
(45) Date of publication and mention of the grant of the patent: **08.08.2018**
(21) Application number: 13845617.3
(22) Date of filing: 15.02.2013
(51) Int. Cl.: A01D 41/14, A01D 45/22, A01D 57/01, A01D 57/02, A01D 57/20, A01D 57/30, A01D 63/04, A01D 65/08

(54) **MOWER AND WINDROWER IMPLEMENT FOR VARIOUS CROPS**
SCHWADMÄHERVORSATZ ZUM MÄHEN UND SCHWADEN VERSCHIEDENER NUTZPFLANZEN
OUTIL DE FAUCHAGE ET D'ANDAINAGE POUR CULTURES DIVERSES

(30) Priority: 08.10.2012 BR 102012025650
(43) Date of publication of application: 28.10.2015
(73) Proprietor: Indústrias Reunidas Colombo LTDA, Pindorama/SP CEP.:15830-000 (BR)
(72) Inventor: BERTINO, Luiz Henrique, CEP: 15830-000 Pindorama - SP (BR)
(74) Representative: Magalhães Simões, José Raúl
(86) International application number: PCT/BR2013/000048
(87) International publication number: WO 2014/056055

(56) References cited:
- EP-A1- 0 471 961
- GB-A- 594 179
- US-A- 3 230 694
- US-A- 3 699 751
- US-A- 4 198 803
- US-A- 4 341 061
- US-A- 5 167 110
- US-A- 6 024 178
- US-A1- 2007 004 583

## Description

### Field of Invention

The present invention refers to an agricultural implement meant to function attached to a conventional tractor with an adequate power outlet and hydraulic system; more specifically an oil pump, as this implement has mechanical activation and hydraulic engines for different sets. The first of these is a lifting and collecting frontal set, positioned horizontally and made of many claw shaped collecting combs, which individually rotate and orbit around a special structure. This set has been developed to lift and move the plants to the inside of the machine. It is located besides scissor like vertical cutting bars which limit the width of the of the rows as the plants are cut at their base and launched back to the top of the last aligning set, a pair of transversal conveyor belts which are situated along the width of the machine. Between them is an empty space for unloading and windrowing to which both the conveyor belts are directed at, bringing the material collected so that it falls to the ground, creating the windrows. These sets and processes make up for an ideal implement for harvesting and windrowing different plants, manly those of bean, soy and plants alike.

### State of the Art

There exist today different agricultural implements for executing the tasks mentioned above, especially harvesting and windrowing beanstalk, such as the ones presented in the Brazilian documents below:
PI0904564 - 25/11/2009
EQUIPMENT FOR HARVESTING BEANSTALKS AND ALIKE
PI0701818 - 30/07/2007
SYSTEM FOR CUTTING AND WINDROWING BEANSTALKS AND ALIKE
MU8600961 - 30/05/2006
ARRANGEMENT INTRODUCED IN AN AGRICULTURAL IMPLEMENT TO REAP AND COLLECT
VARIOUS GRAIN CULTURES
MU8301613 - 14/07/2003
ARRANGEMENT INTRODUCEDIN A FIXED SIEVE FOR A BEAN AND PEANUT HARVESTER
MU8301332 - 28/07/2003
ARRANGEMENT INTRODUCEDIN NA AGRICULTURAL IMPLEMENT
TO REAP AND COLLECT BRANCHES OF VARIOUS CULTURES
MU8201891 - 13/08/2002
ARRANGEMENT INTRODUCED IN COLLECTING MOUTH FOR A BEAN AND PEANUT HARVESTER
PI0203312 - 16/08/2002
REAPER AND GATHERERER SETFORBRANCHES OF VARIOUS CULTURES
PI0004195 - 01/09/2000
BEAN GATHERING PLATFORMCOUPLED TO AN UNIVERSAL HARVESTER.
PI0002298 - 05/05/2000
HARVESTING MACHINE
PI0001647 - 19/04/2000
BRANCHES REAPER SET
PI9902566 - 25/06/1999
REAPER AND GATHERERER SETFOR BRANCHES IN A GRAIN HARVESTER
MU7900789 - 21/05/1999
ARRANGEMENT INTRODUCEDIN A BEANS AND PEANUT HARVESTER
MU7801088 - 08/06/1998
ARRANGEMENT INTRODUCEDIN A BEANS AND PEANUT HARVESTER
PI9404196 - 17/10/1994
MOWER BEANS HARVESTER
PI9205001 - 08/12/1992
REAPING MACHINE FOR COLLECTING GRAINS
PI9202621 - 07/07/1992
BEANS HARVESTER
PI9102861 - 08/07/1991
GRAIN REAPER, COLLECTOR AND WINDROWER
MU7101502 - 05/07/1991
BEANS HARVESTER
PI9102501 - 18/06/1991
AGRICULTURAL IMPLEMENT FOR COLLECTING PEANUTS AND BEANS
MU7100025 - 02/01/1991
BEAN PULLER
PI8204552 - 02/08/1982
IMPROVEMENT IN A MECHANIC AGRICULTURAL IMPLEMENT TO DISROOT AND WINDOROW BEANS
PI8200403 - 22/01/1982
AGRICULTURAL IMPLEMENTTO DISROOT BEANS ANDALIKE
PI8007600 - 19/11/1980
MECHANIC IMPLEMENT TO COLLECT BEANS COUPLED TO A BEAN HARVESTER
MU6000710 -17/06/1980
AGRICULTURAL IMPLEMENT FOR CUTTING AND DISROOTING BEANS
PI7706839 - 12/10/1977
HARVESTER FOR BEANS AND OTHER USES
Reference is also made to United Sates patent US5167110 filed on 17/05/1991 for ONE PASS
BEAN CUTTING AND WINDROWING APPARATUS.

After looking at these, we can see there are currently a considerable variety of implements to process cultivations of beans. Some are more complex, used for reaping and separating the grains, while others feature ways of harvesting and windrowing the plants so that they later may be gathered and processed for sorting and cleaning of the grains.
The disclosures of US5167110 define the preambular part of claim 1.
Also, PI0001647, shows an agricultural complement in the form of an independent cylinder head, formed solely by a structure capable of being easily attached to different types of tractors. These tractors can range from the simple most ones, to the more sophisticated, in a way that said cylinder head can be powered by the power outlet of such a tractor. Thereby, with just one simple equipment, the producer has available to him an implement for reaping and windrowing different types of plants, notably the beanstalk. Therefore, the objective of the present invention is a mechanical unit to optimize the entire process of harvesting different types of plants that produce grains such as: wheat, rice, sorghum, peas, beans and/or others. This mechanical unit not only features a low manufacturing cost, but also requires low maintenance and can be acquired by small and medium sized producers.

PI9902566 describes an agricultural complement in the form of an independent cylinder head, formed by two structures. The first of these features mechanical resources for assembling a gathering system and a reaping system. The reaping system cuts the plant at its base, while the other gathers it up and throws it backward in the direction of two conveyor belts. These belts are transversally aligned and work in opposite directions pulling the plant cluster from the collecting roller to the center of the set, and from this point back, starts the action of the third conveyor belt in a way that the plants can be tossed to the inside of the second structure. Inside of this structure are two other conveyor belts and other sets of the harvester that processes the material collected, that is, sorts the plants from the dirt, dropping the grain completely clean. Therefore, the objective of this invention is a mechanical unit to optimize the entire process of harvesting different types of plants that produce grains such as: wheat, rice, sorghum, peas, beans and/or others.

In both cases mentioned, all the mechanical parts of the agricultural implement are powered by the power outlet of the tractor; this utilizes different belt and chain transmissions.

On the other hand, both implements were developed for small and medium sized producers, and consequently have some restrictions, manly in reference to its performance.

PI0203312 was developed to comprise a large sized reaper/harvester unit to be attached to an automotive machine, which in this case, is not a tractor, but a much more potent machine used to haul large sized agricultural equipment. In general, an automotive is a unit of force considerably big, containing a potent engine that usually runs on diesel. This automotive is not only used for traction, but also for powering one or more high potency oil pumps for activating different hydraulic drives, notably the engines and pistons. Large producers are usually equipped with this type of automotive machine, that can alone haul a plurality of agricultural equipment such as reapers and harvesters of plants, gatherers and other equipment that cut, collect and process different types of cultivations.lt can be generally noted that the known implements usually present its structure defined by the combination of many pieces in the form of metallic profiles, flat plates, folded plates and numerous other components for fixation that concur for the formation of a structure compatible to receive the different subsets.

On the other hand, it is also noted that the conventional implements have its frontal part defined by a transverse rotating piece, where many claws move the plants to the inside of the machine, brushing in a way that allows them to be cut very close to the ground, and at the same time moved to the inside of the machine.

Overtime, it has been noted that such parts could be modified. Besides weighting considerably, its structure requires also many processing operations for its plate parts. This consequently generates the necessity of many hours of welding and assembling, which make it much more expensive, while in the end the weight hiders the implement's performance.

The rotating part used for grabbing the plants and moving them back also usually has a complicated construction. Some of them even utilize a cam system, so that the claws can be correctly positioned and work as a comb or a rake, performing a movement downwards and inwards. Even though this effect is enough to stabilize the plant to be cut at its base and then be moved to the inside, it was noted that this system could be improved. It could mainly be improved in the form of grabbing the plant, for as has been said before, it is ideal that each set of claws (comb) be moved by means of combined translation and rotation movements. It is expected that either of these movements will launch each comb vertically at the back of the plants, stabilizing them to be cut at its base, and simultaneously, by means of a horizontal movement, bringing them to the inside of the implement. Even though these movements are enough for the good functioning of this set, the conventional implements were not able to make the claws perform a perfect movement, one with certain inclinations to enter behind the plant, and another horizontal backwards movement to drag them at the same time they are cut. The more precise these movements are, the more efficient will consequentially be the process of reaping and windrowing, which can't be done with common equipment.

### Objective of the Invention

The first objective of the invention is a differentiated implement in reference to its lifting and gathering set. Contrary to common machinery, it is not of the rotating type; it is formed by a translating set of claws distributed in the form of parallel "combs", which are connected by their tips to sliding chains adjusted in lateral and medium structures, practically triangular and with internal gears. These gears are responsible for moving said chains in the triangular profile of the referenced structures, and this way, all the combs are equally and simultaneously moved. Each of these combs perform a translation movement around a center, that accompanies the triangular profile of the structure. Accordingly, the translation movement of each comb includes a downward portion that positions the claws behind the transversal row of plants, and then changes direction to a horizontal movement backwards. At this point the plants are stabilized and cut at their base, and the horizontal course of each comb continues and tosses the plants back, in the direction of the conveyor belts. These belts lead and drop the plants on the ground forming the windrows.

Another objective of the invention is achieving a tubular structure on four wheels, two in the front and two in the back. This tubular structure provides a way for all the sets to be assembled on it, finalizing an implement lighter and versatile when compared to conventional ones.

Another advantage of this implement is not only its reduced dimensions and weight, but also the fact that the simplified mobile parts made possible the use of small hydraulic engines for activating each set, dismissing the need of camshafts and other heavy parts.
One of the advantages that also stands out is the fact the implement features different adjustable parts, strategically positioned so that the set may work according to the soil and the plant to be reaped and windrowed.

### Description of the Drawings

For better comprehension of the present invention, below is a detailed description of its images:
**Figure 1** represents the implement viewed at an upper frontal angle.
**Figure 2** is a perspective view showing the implement in an upper rear angle.
**Figure 3** illustrates a view of the implement from a lower rear angle perspective.
**Figure 4** is a right side view of the implement.
**Figure 5** is an upper view of the implement.
**Figure 6** reproduces a perspective in an upper frontal angle showing only the tubular structure of the implement.
**Figure 7** shows the same structure as the figure before it, but in a frontal upper angle.
**Figure 8** shows a separated detail in perspective and a separated detail in a side view, particularly showing the details of the opener set and the vertical cutter.
**Figure 9** represents two details in perspective, showing the frontal and rear parts of the opener set and the vertical cutter.
**Figure 10** shows two details in perspective, showing the frontal part of the opener set and vertical cutter.
**Figure 11** illustrates two details, one in perspective and the other in frontal view, showing the opener set and the vertical cutter.
**Figure 12** are isometric views in an upper angle showing details of the gathering and lifting set.
**Figure 13** shows lower angle isometric views of other details of the gathering and lifting set.
**Figure 14** reproduces a side view highlighting the profile of the gathering and lifting set.
**Figure 15** is a cross sectional view on the line indicated in the previous figure showing the gathering and lifting set.
**Figure 16** shows a magnified detail in perspective highlighting one of the transmission boxes of the gathering and lifting roller, and in this case, the lid or side closing is dislocated.
**Figure 17** is a view of the same details showed in the previous picture, but exploded for viewing purposes.
**Figure 18** shows detail "B" magnified, indicated in the cross sectional view in figure 15.
**Figure 19** represents a perspective partially exploded in detail "C" indicated in figure 15, highlighting another transmission box of the gathering and lifting roller.
**Figure 20** shows a magnified perspective of detail "A" indicated in figure 15, highlighting the activating and inclination regulating devices of one of the transmission boxes of the gathering and lifting roller.
**Figure 21** illustrates an exploded perspective of detail "A" indicated in figure 15, highlighting the activating and inclination regulating devices of one of the transmission boxes of the gathering and lifting roller.
**Figure 22** is a perspective of detail "A" assembled, indicated in figure 15, highlighting the activating and inclination regulating devices of one of the transmission boxes of the gathering and lifting roller.
**Figure 23** is another perspective of detail "A" assembled, indicated in figure 15, highlighting the activating and inclination regulating devices of one of the transmission boxes of the gathering and lifting roller, but from a low angle.
**Figure 24** reproduces a magnified view of detail "A" indicated in figure 15.
**Figure 25** is a magnified view of detail "C" indicated in figure 15.
**Figure 26** shows a detail magnified in perspective, highlighting the right side of the implement to better show the supporting arm of the gathering and lifting roller.
**Figure 27** is a right side view of the implement.
**Figure 28** shows a left side view of the implement.
**Figure 29** represents two perspectives in an upper front angle of the implement partially assembled, highlighting the reaping and windrowing set.
**Figure 30** shows another view similar to the previous figure, however, highlighting other details of the same set.
**Figure 31** illustrates an isometric view showing a magnified detail of the reaper and its components of activation.
**Figure 32** shows two perspectives of the details of the reaper and windrowing conveyor belts: one from above, and the other from below, highlighting the reaper and windrowing conveyor belts.
**Figure 34** reproduces a perspective in an upper angle highlighting the details of the windrowing conveyor belts.
**Figure 35** is the same view as the one before, but from a low angle, showing other details of the conveyor belts.
**Figure 36** shows a magnified detail of figure 34.
**Figure 37** illustrates a magnified detail of figure 35.

### Detailed description of the invention

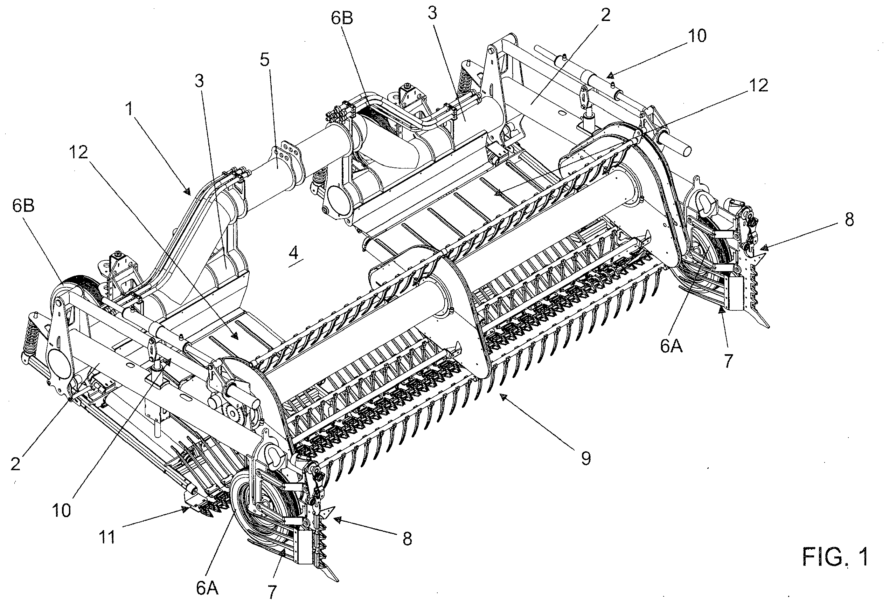

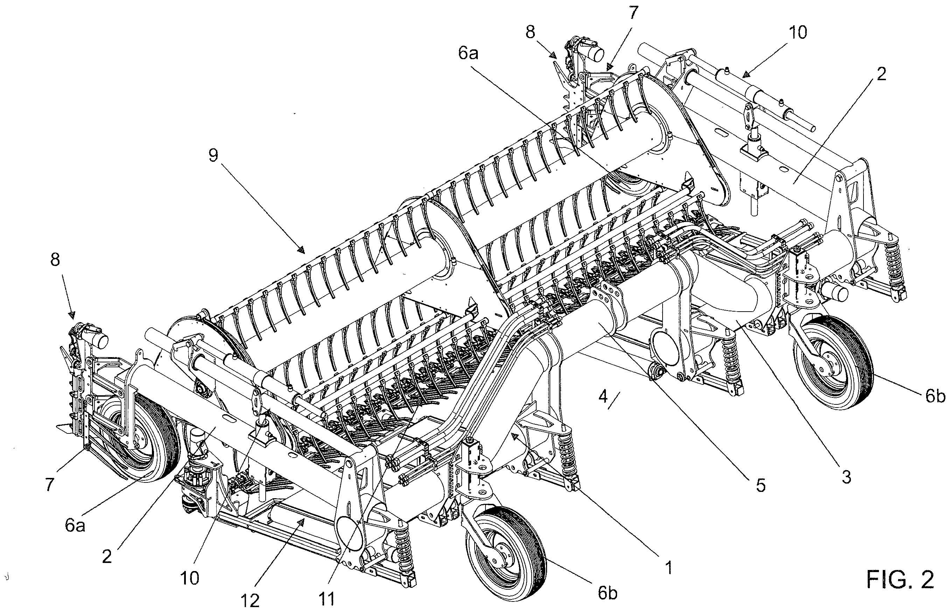

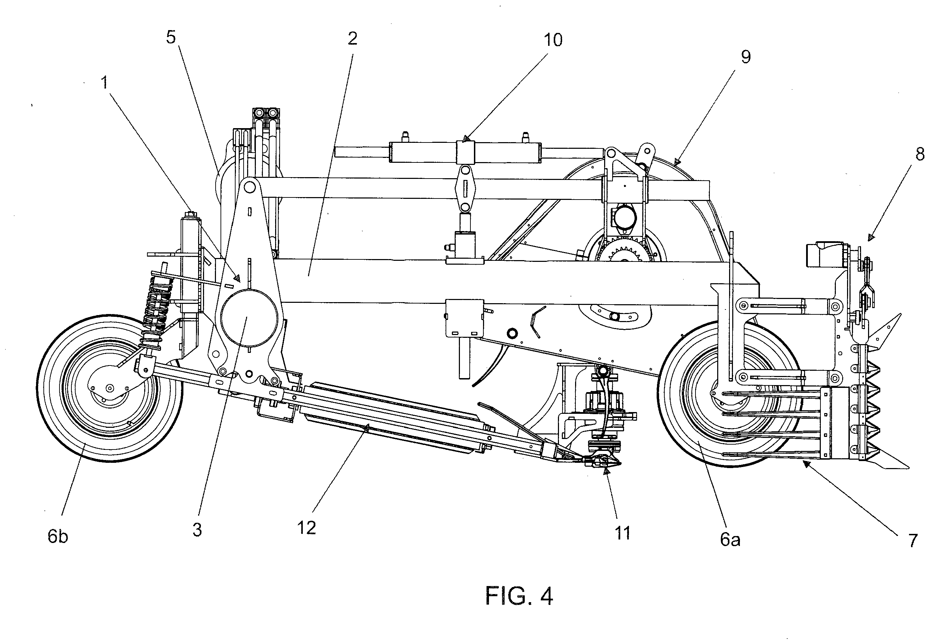

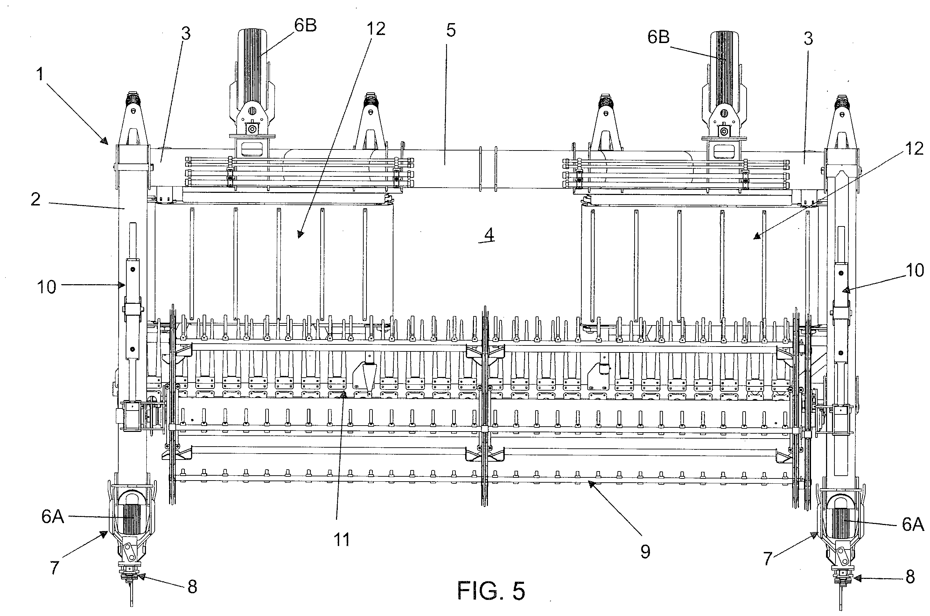

According to these illustrations and their details, particularly figures 1 to 5, the present invention, **IMPLEMENT FOR REAPING AND WINDROWING VARIOUS CULTIVATIONS,** is characterized for comprising:
A tubular structure (1) in the shape of a lying down "U", composed of side tubes (2), parallel and aligned in the same plane and by a connecting rear portion made of two tubular axial segments (3) with a gap or opening (4) in between them. The structural interconnection is completed by an elevated part, also tubular and trapezoid shaped (5), forming the rear elevated part of said structure and which serves as an exit for the windrowed material. The frontal part is represented by the side tubes (2), with which the set takes the form of a lying down "U" and is supported by the frontal (6A) and rear wheels (6B). The frontal wheels (6A) are mounted on the distal ends of the tubes (2), while the rear ones (6B) are mounted on the median tubular segments (3) in a way that the entire structure may be supported on the ground by them.

Two sets of openers (7) integrated with the vertical cutter sets (8), mounted in front if each front wheel (6A), in which the set of openers (7) are responsible for opening way and separating the plants to be reaped from the side rows which won't be reaped or are out of the reach of the machine. Simultaneously, the vertical cutting devices trim the branches that could eventually cause a blockage, trimming the plant vertically, and in this case, the fallen cluster can be from plants that might or might not be gathered by the implement.

A gathering and lifting set (9) which extends for the whole width of the implement between the frontal wheels (6A). Its ends are adjustably attached to oscillatory arms (10) which are placed over the side tubes (3). These arms allow said gathering and lifting set (9) to be moved vertically and horizontally according to a desired adjustment coherent with the surface of the ground and according to the type of plant being reaped and windrowed. This gathering and lifting set (9) is responsible for selecting a row of plants corresponding to the width of the machine, pulling it inward and upward, at the same time as the reaping.

A reaping set (11) assembled along the entire transversal extension of the machine, forming a transversal cutting line kept over the soil. This reaping set is assembled on the structure (1) in a spring manner that allows the cutting line to follow the level of the ground. With the forward movement of the set, the plants are cut simultaneously at the base and in all the transversal extension of the machine, concomitantly with the work carried out by the gathering and lifting set (9). The plants reaped are moved backwards and enter the phase of windrowing.

A windrowing set (12) positioned transversally between the reaping set (11) and the tube segment (3) of the structure (1), including an opening (4), in a way that the reaped plants can pass through it continuously and form the windrows on the ground.

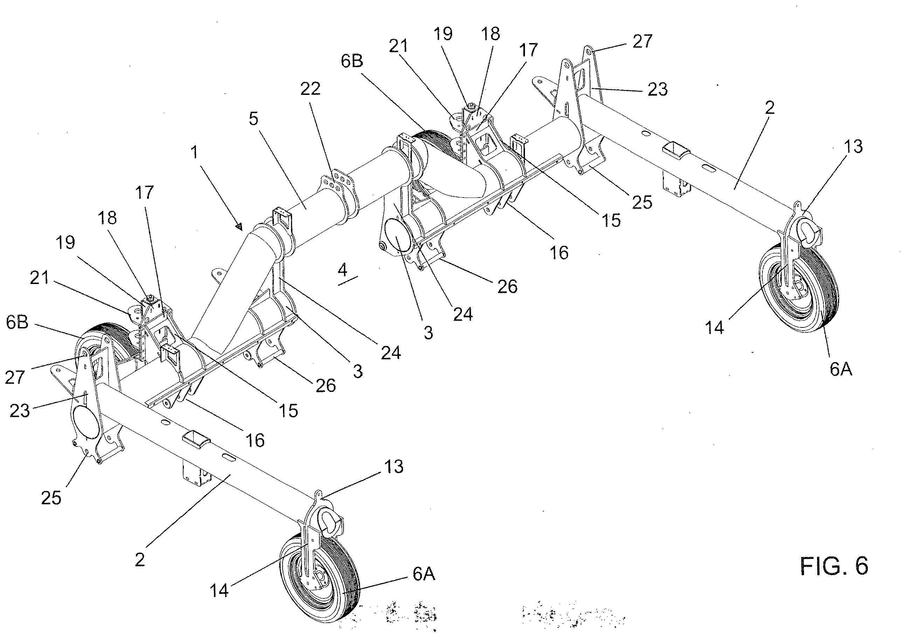

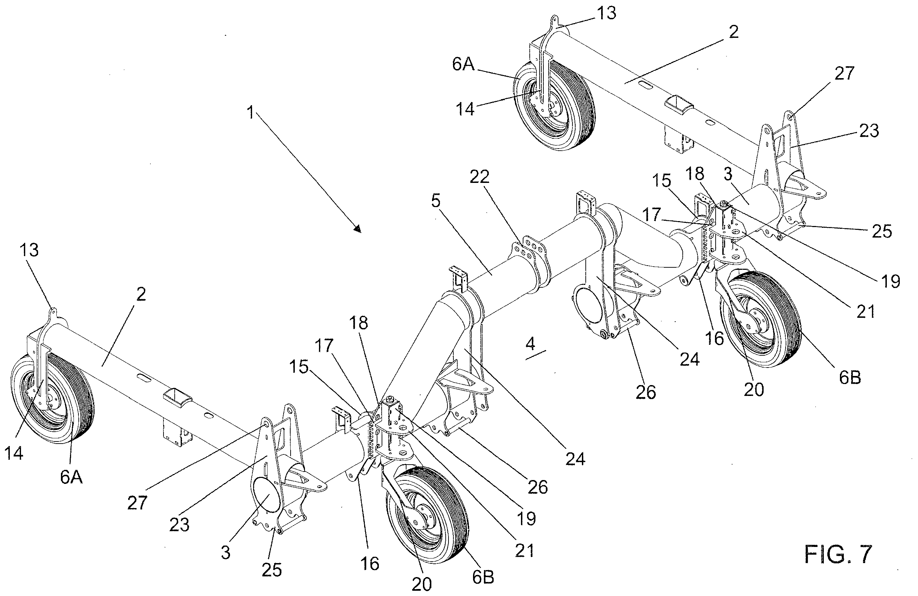

As illustrated by figures 6 and 7, the tubular structure (1) in "U" shape features various strategic supports for the assembling of the sets previously described, such as plate forks (13) with circular fitting spaces for coupling to the distal extremities of the tubes (2). These forks have its tips facing down and receive complementary plate pieces (14), which have in between them the frontal wheels (6A) with its respective axis and cube. The rear wheels (6B) include supports of similar pressed plates (15), with a circular fitting opening for the tubular segment (3) and prolongations which that set up lower bearings (16) and a vertical mirror (17). This mirror levels a vertical mounting support for the height adjustable fixation of a counter plate (18) and a square tube equally vertical (19). On the inside of this square tube is fixed the fork (20) of the wheels (6B), and in this set, there are a pair of flaps (21) which work together with plate rings (22) positioned in the middle part of the trapezoid shaped tube (5), in being the slots used for coupling the implement to the front of the tractor.

Continuing to reference figures 6 and 7, another two assembling support sets, (23) and (24), are planned. The first of these interconnects in 90° the rear ends of the side tubes (2) and one of the transversal tubes (3). The other (24) interconnects the upper part of the trapezoid shaped tube (5) with the other corresponding ends of the tubes (3) of the structure (1). All supports (23 and 24) are equally made of parallel plates with the circular openings for the corresponding tube parts of the structure (1) and extend upward and downwards, setting up lower (25, 26) and upper (27) bearings for articulated coupling of the different sets of the implement. Lower bearings (25) for the reaping set (11), lower bearings (26) for the windrowing set (12) and finally upper bearings (27) for the assembling structure (10) of the gathering and lifting set (9).

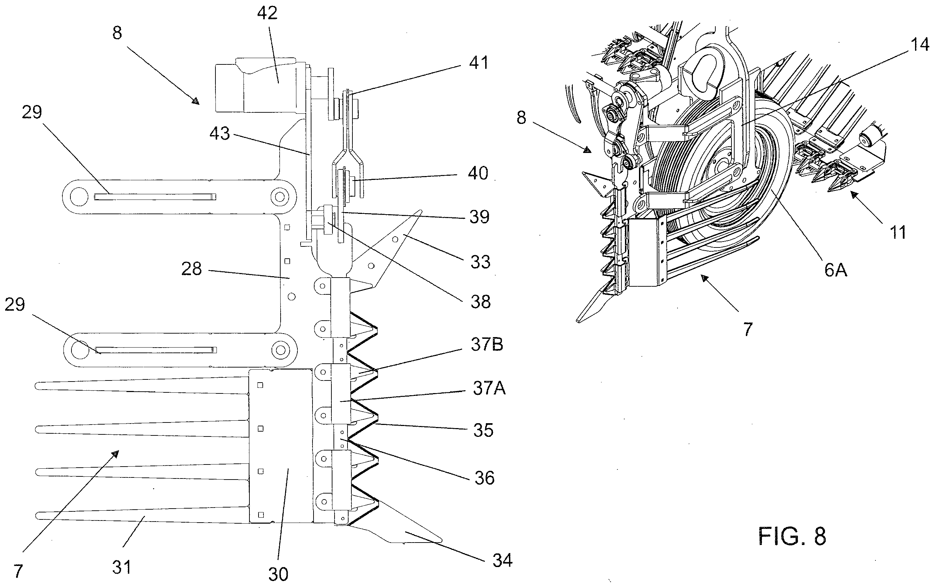

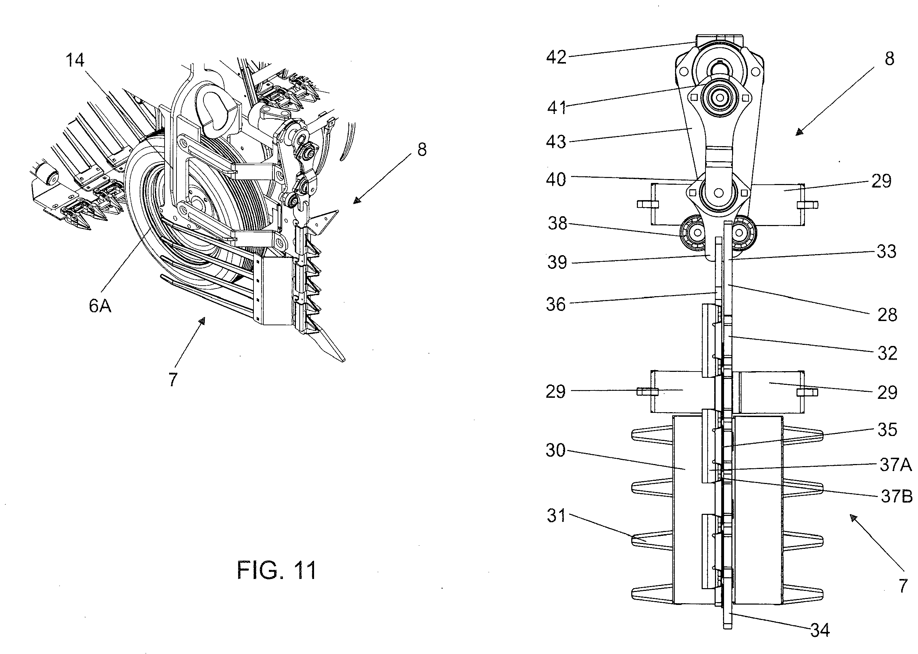

Figures 8 to 11 show in detail the opener sets (7) integrated with the vertical cutter set (8), assembled in front of the of each front wheel (6A). Each of these sets is formed by a fixed plurality of plates (28), as if it were a vertical ruler, in whose borders are fixed two equal supports ordinarily "Y" shaped, or in the form of forks (29). These horizontal supports face backwards and the distal tips of their ramification envelop the frontal wheel (6A) and are fixed on the wheel's side plates (14), while by its opposite end it is fixed on the corresponding edge of plate piece 28. On this same edge of plate piece 28, below forks 29, it features a pair of plate pieces positioned in a "V" shape (30), mirrored and equally positioned, from which extend various ribs or rods, (31) which like the forks above it, envelop the front and sides of the front wheels (6A). In this manner, both forks and ribs contribute in opening way to said wheels by diverting the plant ramifications, and maintaining their wholeness while positioning them correctly during their process of being reaped and windrowed.

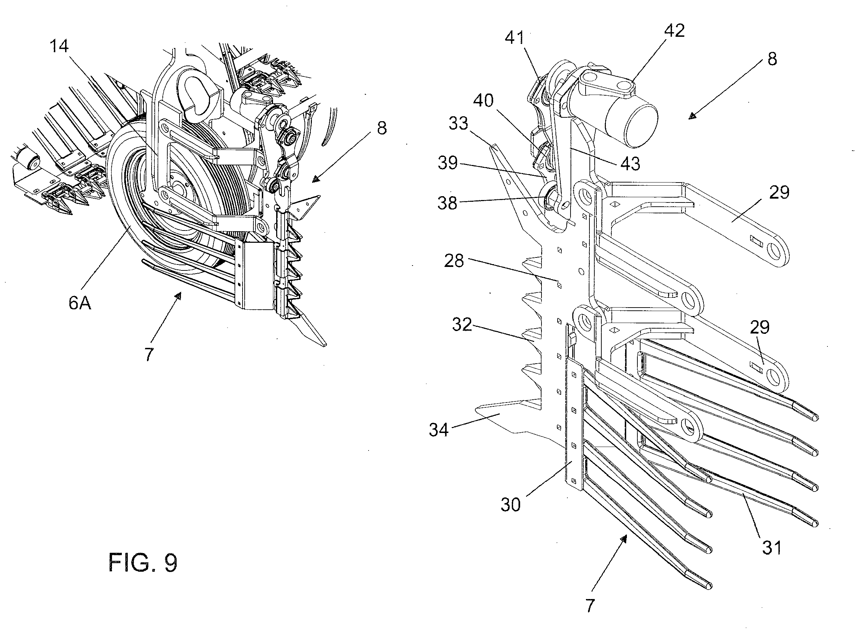

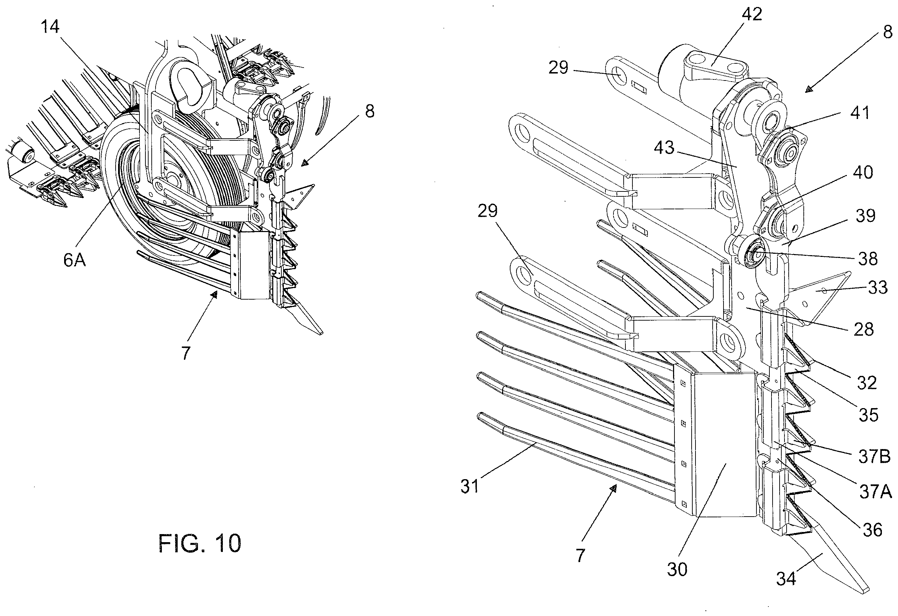

Still referencing figures 8 to 11, the cutting set (8) is assembled along the frontal edge of plate slab 28, and as figures 9 and 10 show, this edge extends forward featuring a row of triangular cutting teeth (32). Two of these are significantly longer: The upper (33) is elongated with an upward inclination, and the bottom one (34) is elongated with a downward inclination. They both also function as guides to funnel the plants toward the triangular cutting teeth (32), which like scissors, function together with another set of moving teeth (35) assembled along a moving plate piece. This piece is mounted in a sliding manner on the inside of strainers (37A) with fixed teeth (37B), fixed on plate piece 28. This way, the mobile teeth (35) stay in between the fixed teeth 37B and 32. The before mentioned moving plate piece (36) has its upper end guided in between bearings (38) and is orthogonally connected through this same end to a prolonging (39), that by means of articulation (40), is connected to an cam set (41) and its respective triggering set by hydraulic engine (42) assembled on a support (43) that not only serves as a base for the two bearings, (37) but is fixed to plate piece 28.

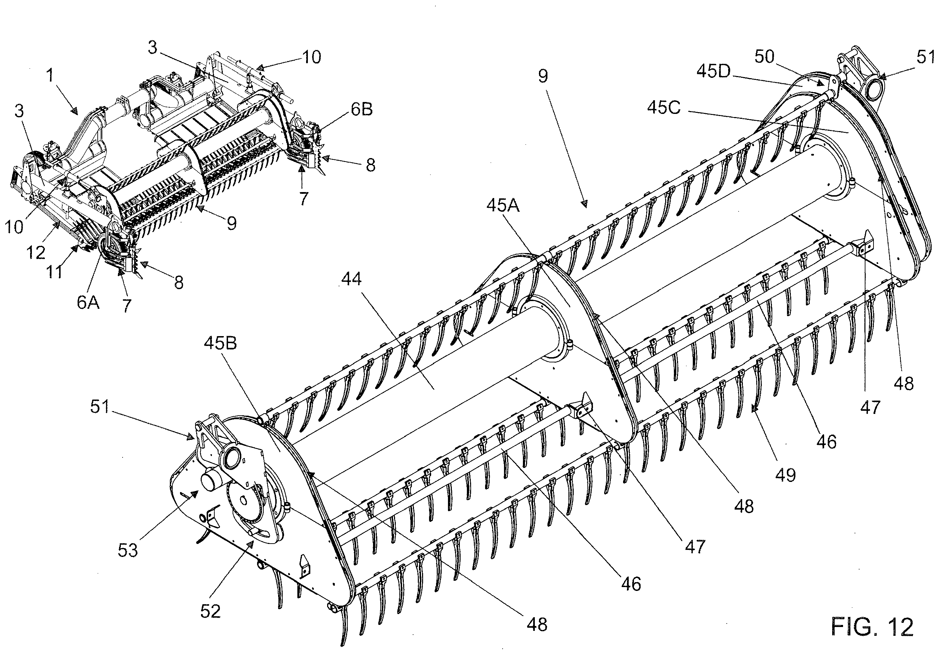

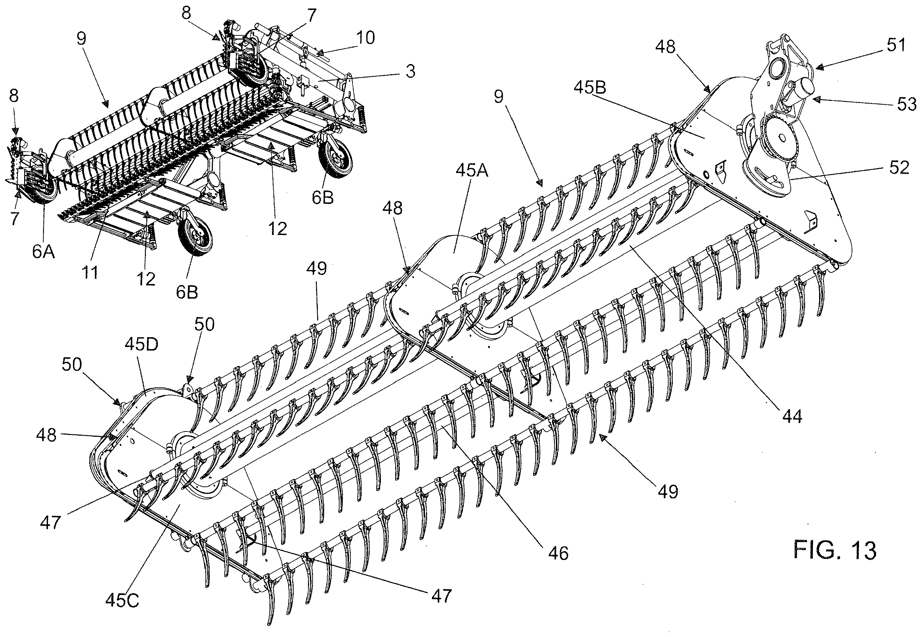

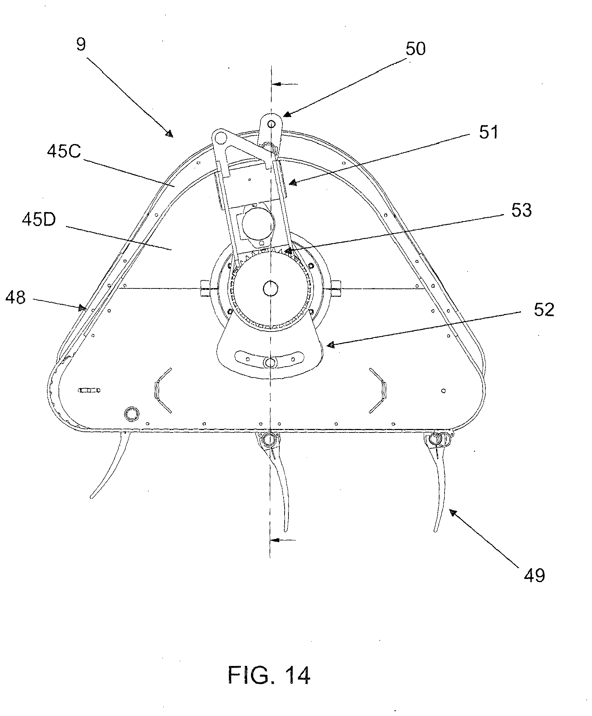

In relation to figures 12, 13 and 14, the gathering and lifting set (9), as has been said before, occupies the entire width of the implement between the front wheels (6A). Its ends are adjustably fixed to a complementary tubular structure (10), which swivels and extends over the side tubes (3). This complementary structure provides means for said gathering and lifting set (9) to be moved horizontally and vertically to conform to a desired position coherent with the surface of the soil and according to the type of plant being reaped and windrowed. This gathering and lifting set (9) is responsible for selecting a lane of plants corresponding to the width of the machine, moving it inward and upward, at the same time as the reaping phase. For this, this set consists of a structure defined by a rotating central tubular axis (44), which passes through three boxes of transmission and synchronism: One in the middle (45A) and two at the opposite sides (45B e 45C). Beside box 45C is a forth transmission box (45 D). They are all equally aligned and triangular shaped with rounded edges, have the same dimensions and have a vertex pointing up, and a side pointing down. These triangular shaped boxes also feature stabilizing bars (46) with their respective supports (47). At least two bars in each space between the transmission and synchronism boxes (45ABC), boxes that also have its outline equipped with a dragging device, (48) where there are attached many equally distant combs (49) positioned in a parallel manner to travel simultaneously in complete and continuous movement along the outline of said boxes (45ABC). A stable movement that always keeps each comb in a vertical position through a complementary device (50) assembled in the outline of box 45D. In its side facing outward, box 45D has a bearing support (51) for axis 44 and a device for regulating the inclination (52) of the gathering and lifting roller (9). That is, on the external side of box (45B), aside from support 51 and the inclination-regulating device 52, this set (9) sustains and integrates the parts of the triggering set of the rotating axis (44).

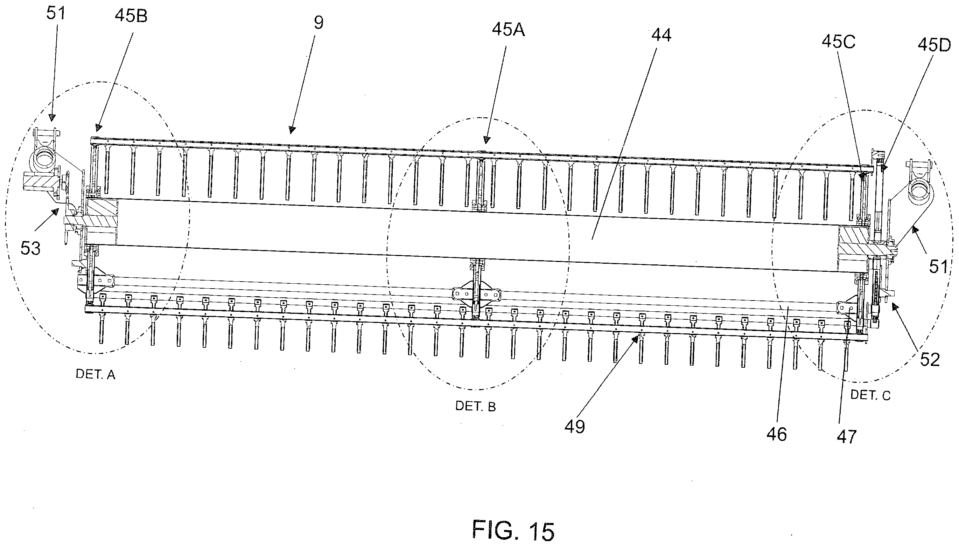

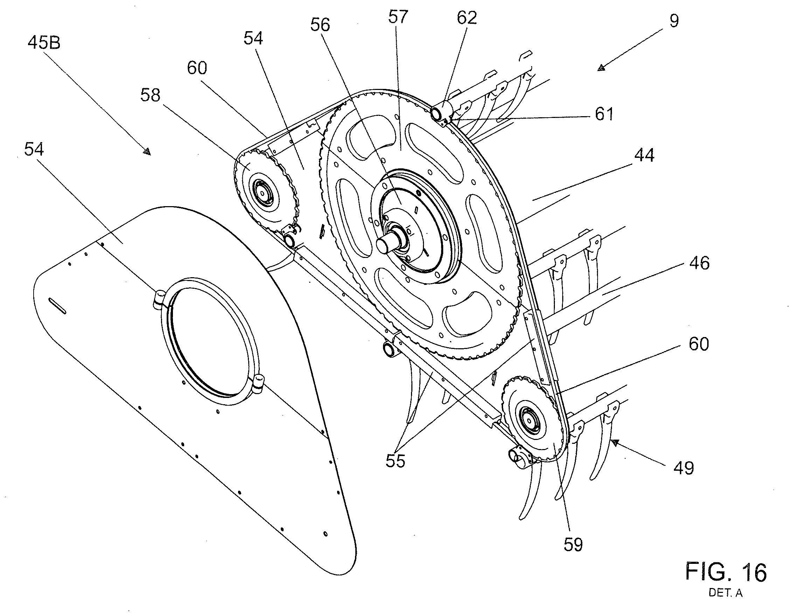

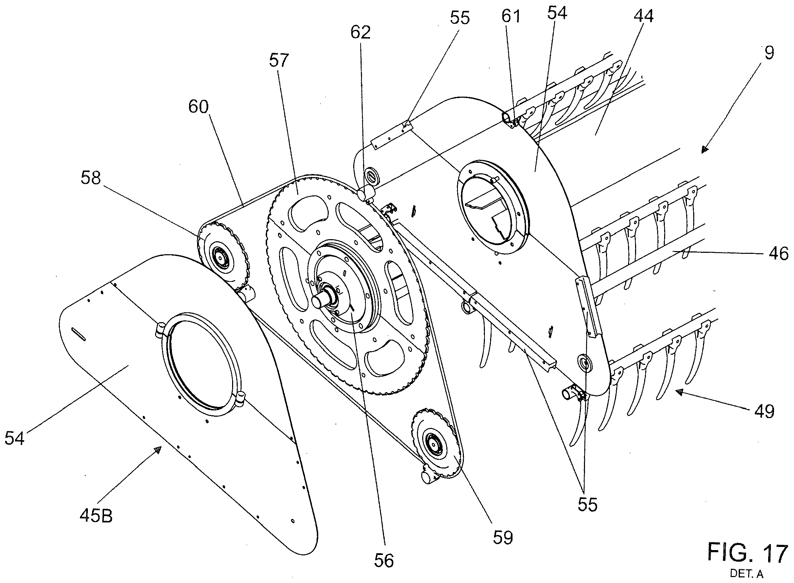

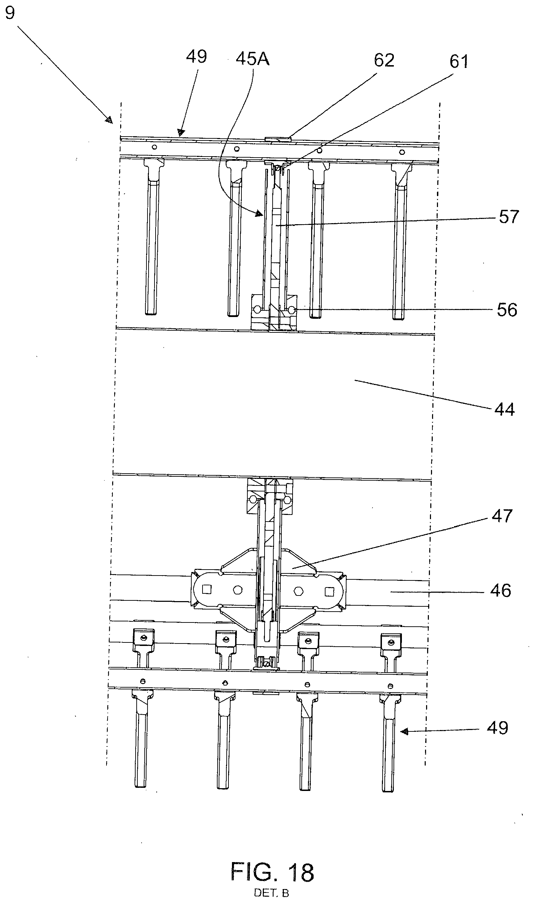

The transmission and synchronism boxes (45A, 45B and 45C) shown in detail in figures 15 through 18 are practically identical, having two walls of metal plate (54), ordinarily triangular with rounded edges, parallel to each other and also spaced apart by segments of "U" shaped profiles (55) facing outward distributed along the three borders. These triangular metal plates also feature pieces that set up a central bearing (56) providing rotating support for an axis (44), and is also the base for a large gear (57) whose diameter is sufficient to coincide with the radius of the rounded upper edge of the corresponding transmission box (45A), (45B) and (45C). On the other two lower rounded edges, in the same manner, are positioned other smaller gears (58) and (59), with bearings in between the two plate walls (54). All three gears together (57, 58 and 59) drive a chain (60) that in turn, passes through the inside of the "U" shaped guides (55) and link to the corresponding support (61) and respective bushings (62), where the combs (49) are rotationally supported and moved by the chain (60).

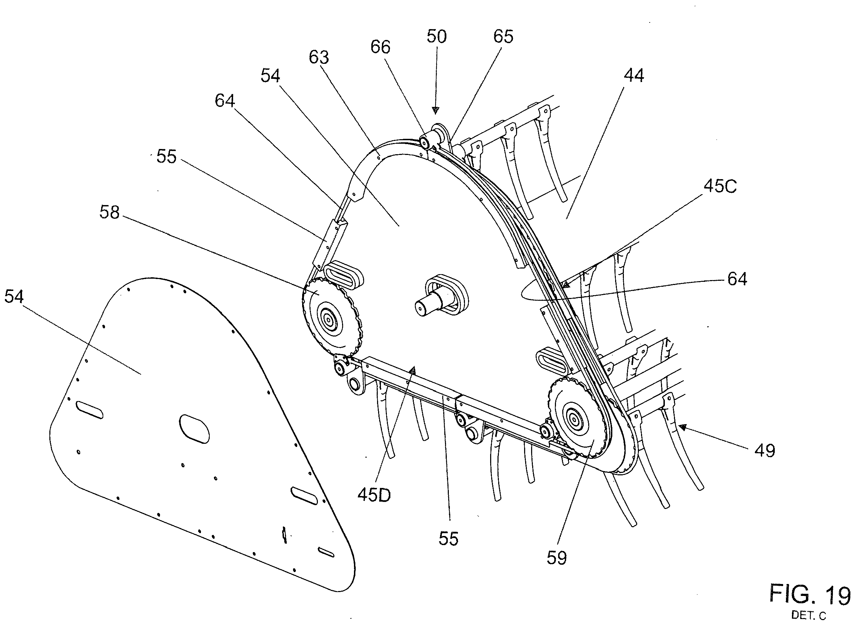

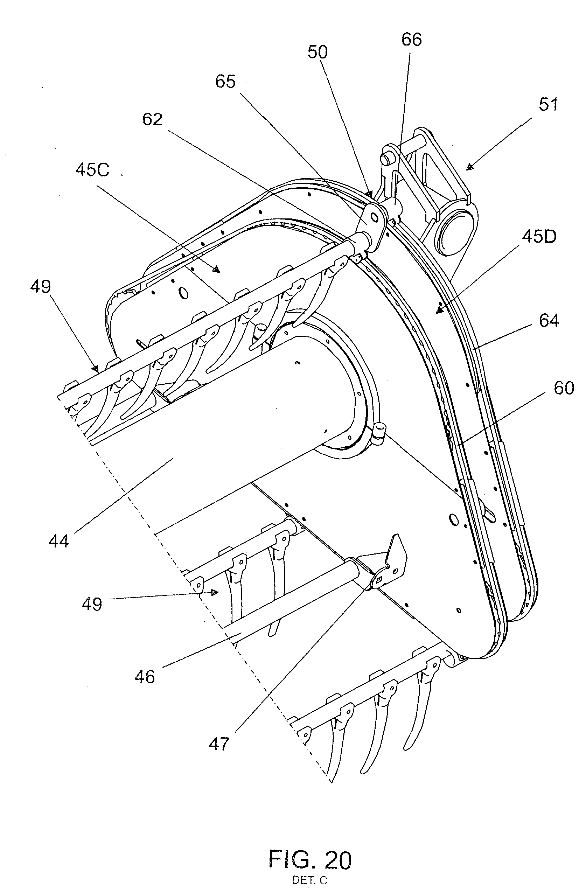

The forth transmission box (45D) is illustrated in figures 19 and 20, where it can be seen that it is set in a position a little bit above the other three boxes, and that it is also made of plate walls (54) spaced apart by "U" shaped guides (55). It includes the same gears 58 and 59, but does not include the large gear in the upper rounded edge. This last one is substituted by another practically semicircular "U" shaped guide (63) in whose interior is the passage of chain 64, in which are coupled all the pantographic devices (50). These devices are crank shaped with a vertical piece (65). They are through one end articulately attached to a support (66), which in turn is fixed on the chain (64), while its other end is rigidly fixed to one of the sides of the corresponding comb (49). In this manner, when the chains (60 and 64) move in the same speed and direction, all combs are equally moved around the boxes (45ABCD), and at the same time kept in the vertical position in relation to the device (50), and of the differentiated positioning of box (45D). Because of it is position a bit above the others, the vertical link (65) always stays in a vertical position independently of where it is positioned around the set of boxes (45ABCD).

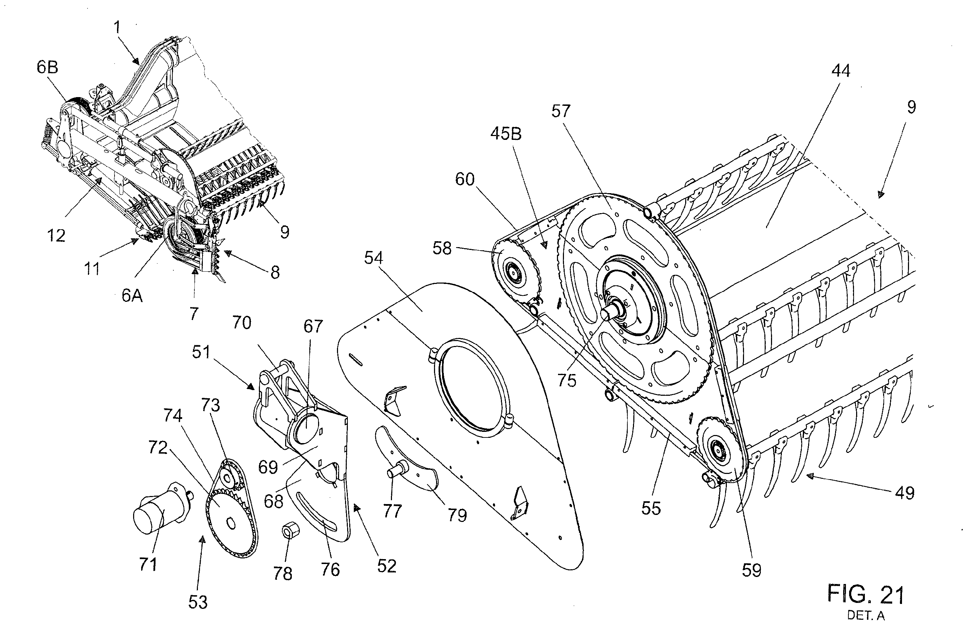

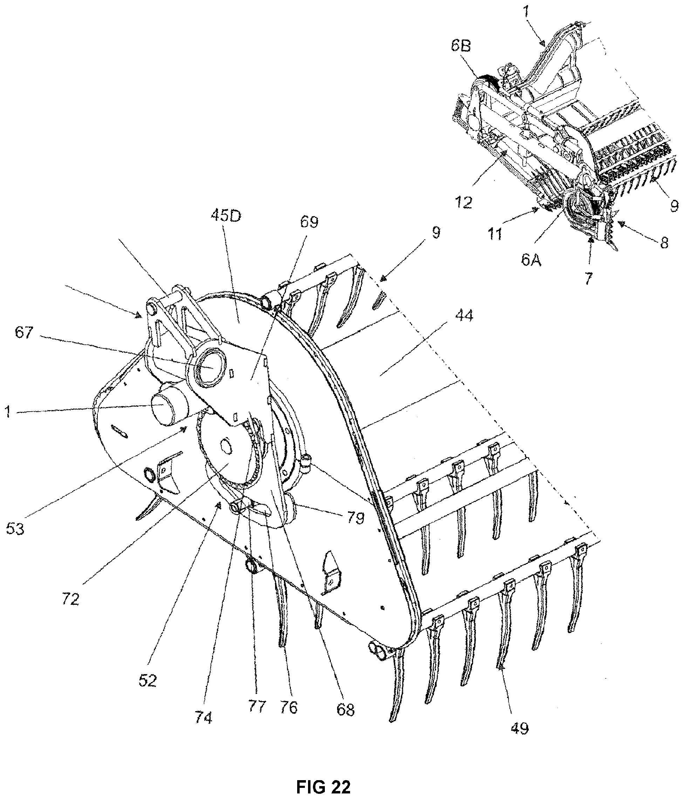

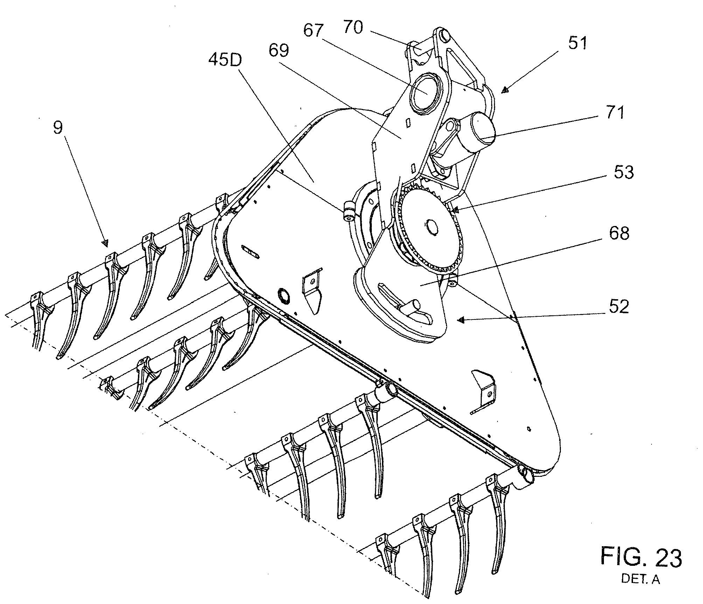

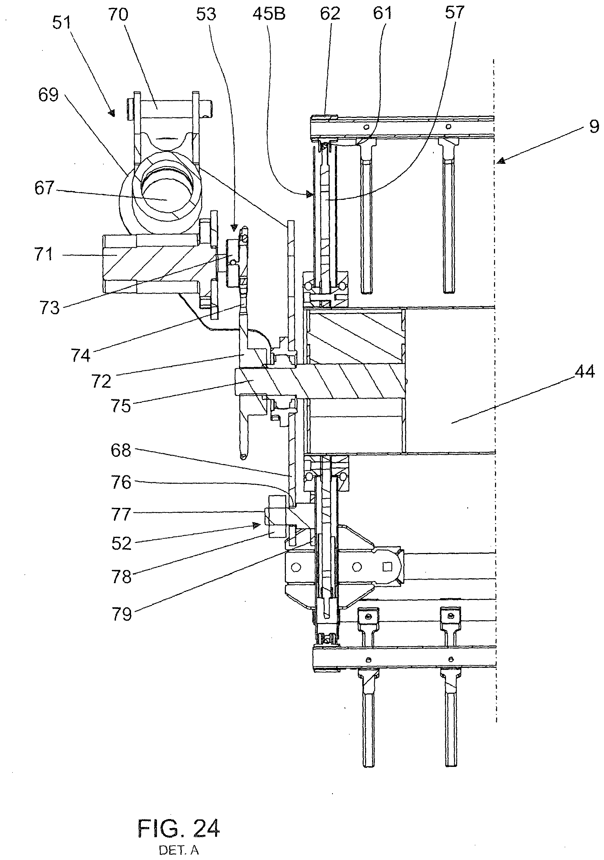

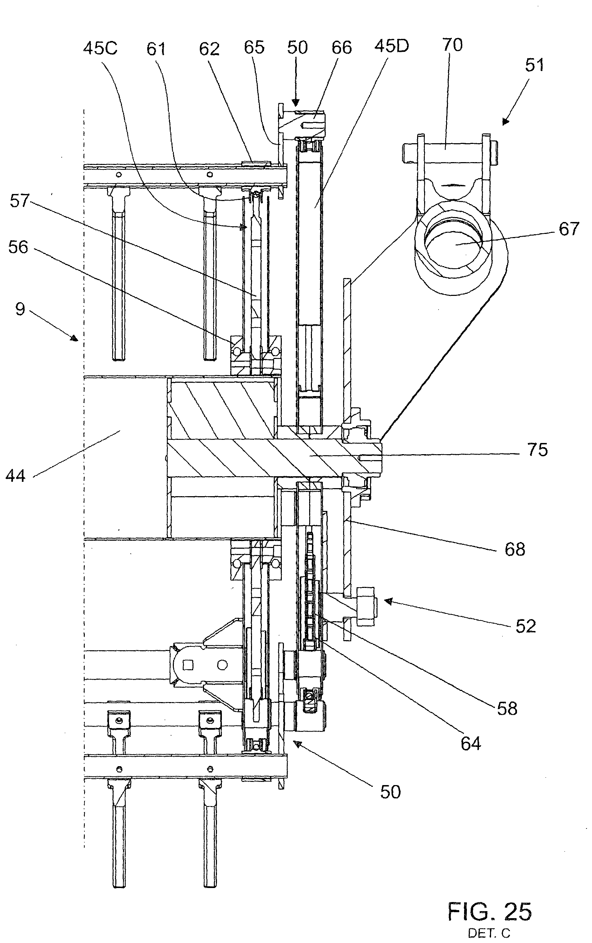

As cited before, the boxes (45BD) illustrated in details in figures 21 to 25 have in its outward facing side, the bearing support 51 for the axis 44 and an inclination regulating device (52) of the gathering and lifting roller (9). That is, on the external side of box (45B), aside from support 51 and the inclination-regulating device 52, this set (9) sustains and integrates the parts of the triggering set (53) of the rotating axis (44).

Support 51 is formed by two bearings orthogonally positioned, an upper (67) and a lower one (68). The first of these is set up by a liner plate piece welded in "U" shape (69), which coupled with a trestle (70), forms a fitting for the swinging arm (10) where the gathering and lifting roller (9) can slide forward and backwards up to an adequate position for its functioning. The second bearing (68) forms a point of articulated anchorage for one of the ends of axis 44, through the triggering set (53).

Continuing to reference figures 21 to 24, the triggering set (53) is formed by a hydraulic engine (71), a transmission of two gears (72 and 73) and a chain (74) and an axis tip (75). This tip is connected to the corresponding end of tubular axis (44), while the opposite end passes through the plate wall (54) and the lower bearing bush (68), receives the larger gear (72) that is interconnected to the smaller gear (73), which in turn is fixed to the axis of the hydraulic engine (71), whose flange is fixed to the support itself (51).

We can tell by observing figure 21, that the driving of hydraulic engine (71) permits the rotation transmission by chain (74) and gears (72 and 73) to rotate the tubular axis (44) though its tip (75), which in turn moves the chains (60-64) of each box, dragging simultaneously along with it all the combs (9).

In reference to figures 21 through 25, the supports (51) compose support bearings for the gathering and lifting roller (9), which in turn, as has been said, has its underside ordinarily flat, as it is desirable for this side to be adjustable according to the desired inclination, which increases the efficiency of the machine. For this, the supports (51) feature inclination regulating devices (52), set up in the lower bearing bush (68), where a curved slot (76) with a pin (77) and respective locknut (78) are present. This pin is welded in a perpendicular manner to a base (79), which in turn is fixed against the plate wall (54) of the gathering roller (9), and this way, inside the limit established by the slot (76) radius, said gathering roller (9) is regulated according to the inclination desired.

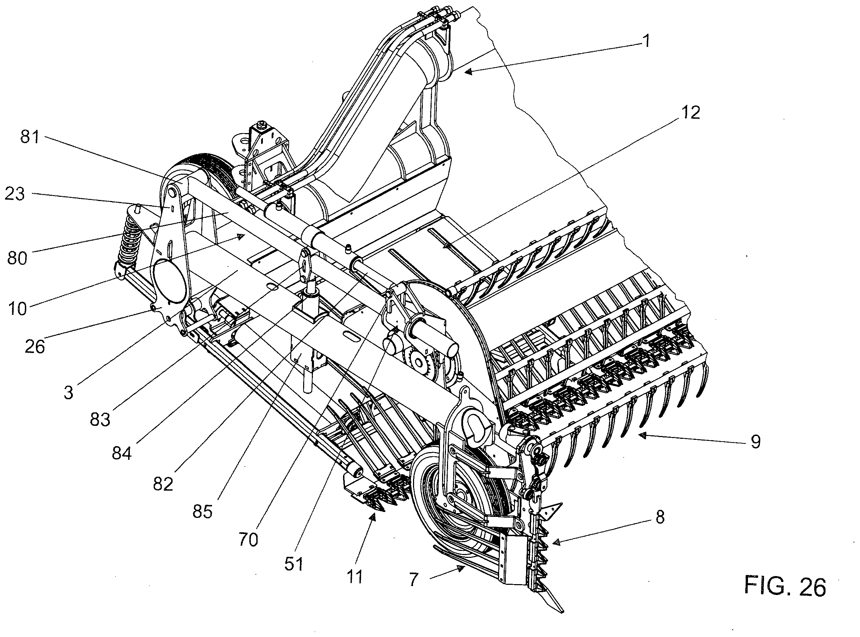

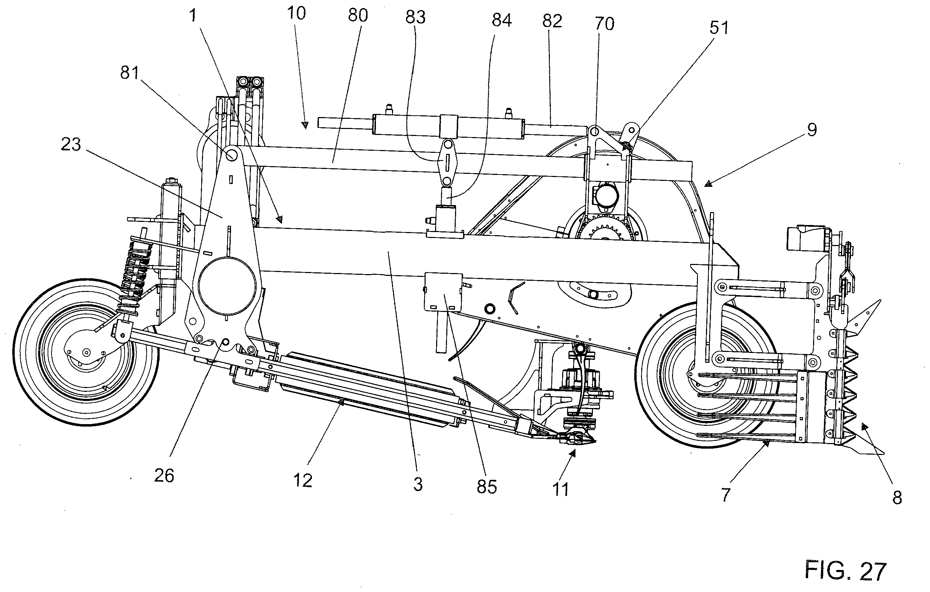

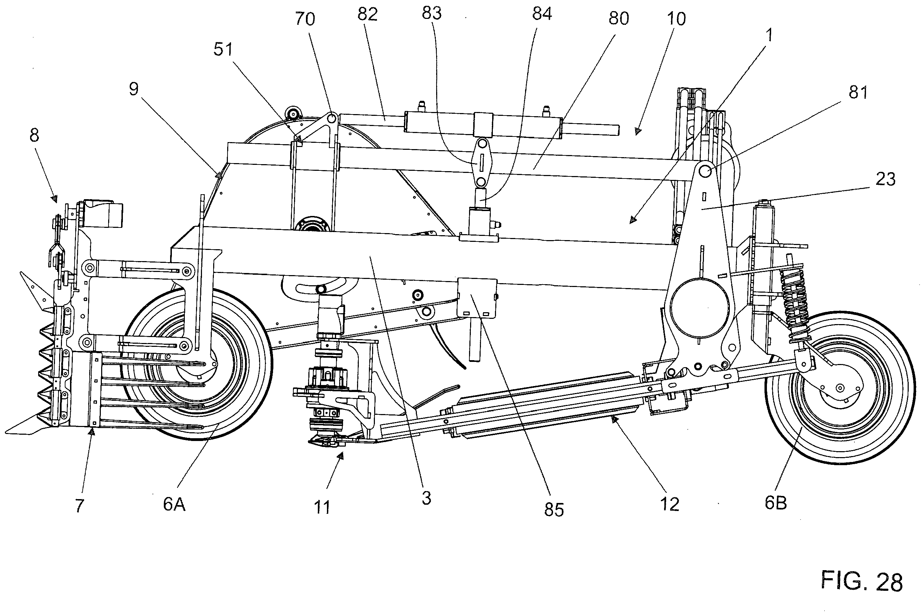

Figures 26, 27 and 28 show in detail the swinging arms (10), one in each side, which extend along the side tubes (3). Arms with means for said gathering and lifting set to be adjusted horizontally and vertically to a desired position to be coherent with the surface of the soil and according to the type of plant being reaped and windrowed. This gathering and lifting set (9) is responsible for selecting a lane of plants corresponding to the width of the machine, moving it inward and upward, at the same time as the reaping. According to this, each swinging arm (10) is formed by a tube (80), whose rear "T" shaped end (81) is articulately coupled in the bearing (23) of the tubular structure (1), while by the opposite side its end slidingly pierces bearing of support 51, in whose trestle (70) is articulately coupled the end of a hydraulic cylinder (82), which in turn is also articulately fixed over tube (80) by a double bearing piece. This piece, which envelops tube (80), is moved vertically by another hydraulic tube (84), assembled on the inside of a box (85) fixed to the corresponding side tube (3). The combined triggering of both hydraulic tubes (82 and 84) allow the gathering and lifting roller (9) to be moved horizontally and vertically to adjust coherently with the surface of the soil and according to the type of plant being reaped and windrowed.

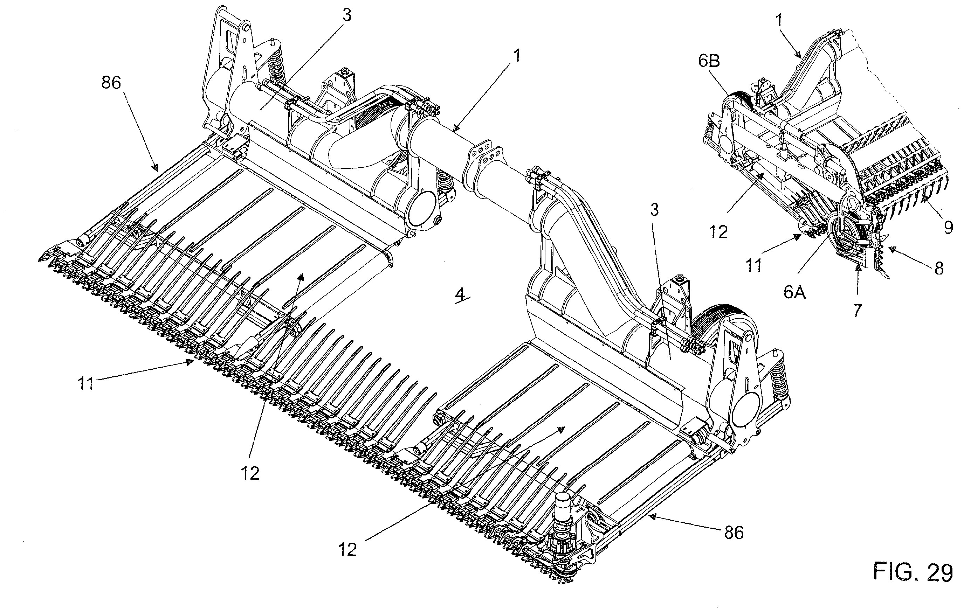

As has been mentioned before, the reaping set (11), as illustrated by figure 29, is assembled along the entire transversal extension of the machine right after the frontal wheels (6A) and the gathering and lifting set (9), forming a transversal cutting line kept over the soil. This reaping set is assembled on structure 1 in a spring manner that contributes to allow the cutting line to follow the level of the ground. With the forward movement of the set, the plants are cut at their base along all the transversal extension of the machine. At the same time, through the work carried out by the gathering and lifting set (9), the plants reaped are brought backwards, entering the phase of windrowing (12).

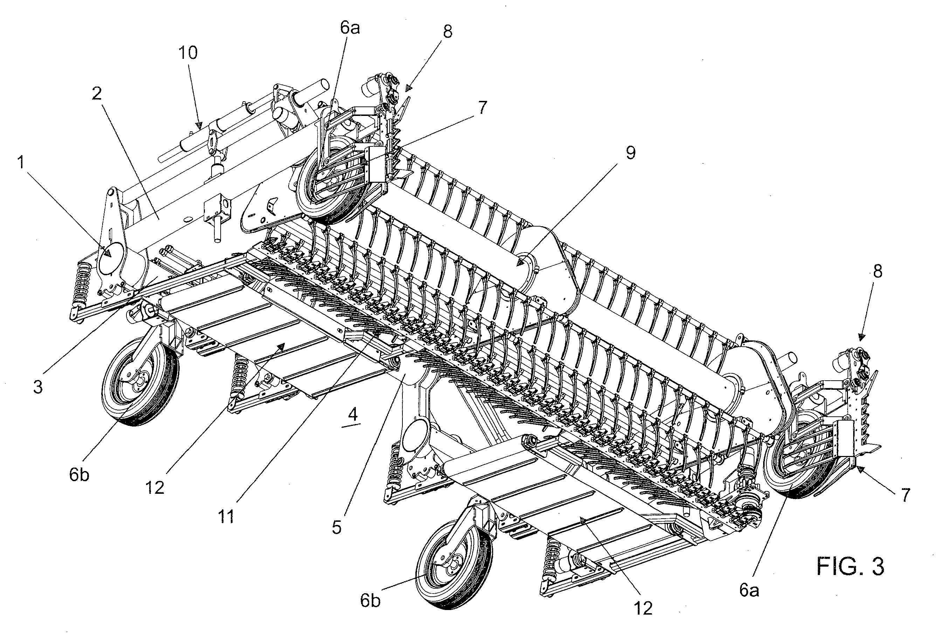

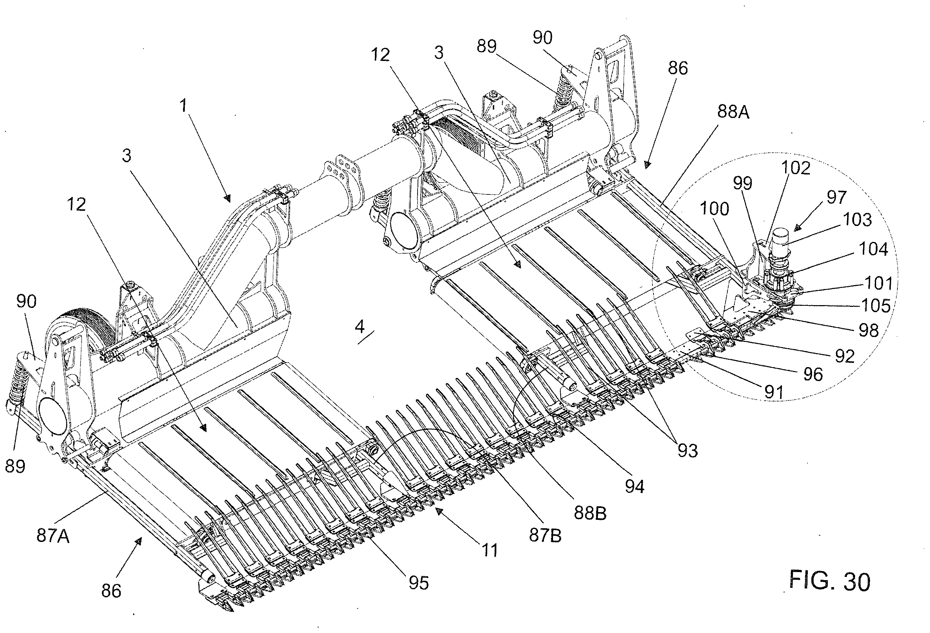

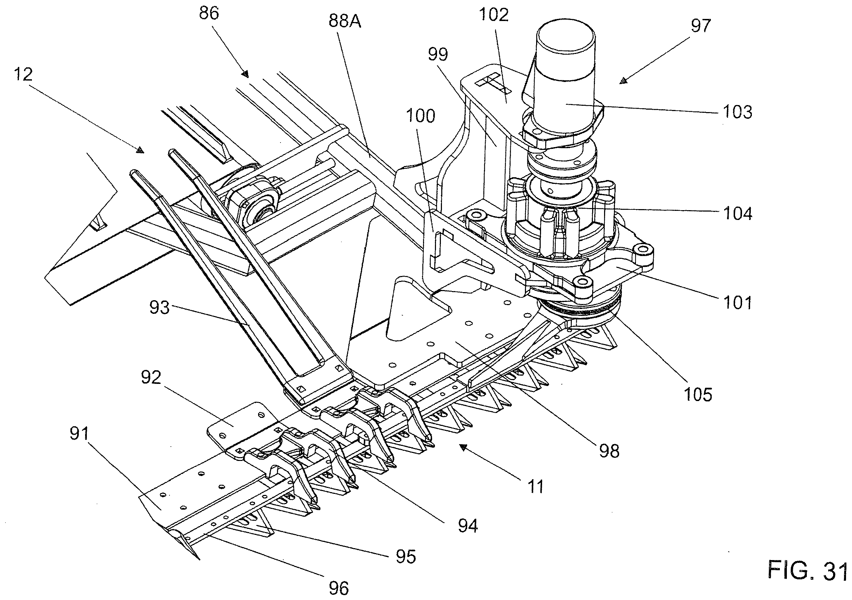

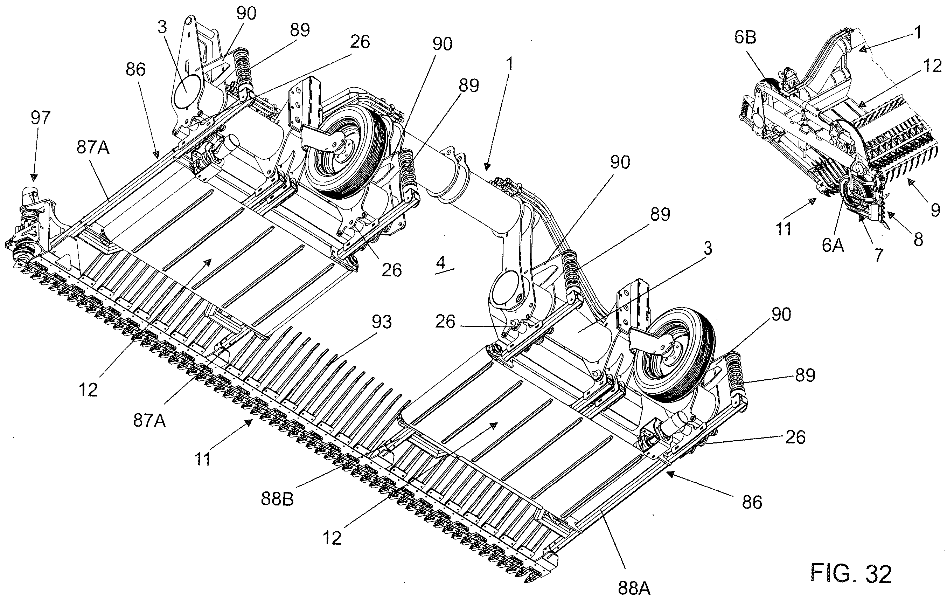

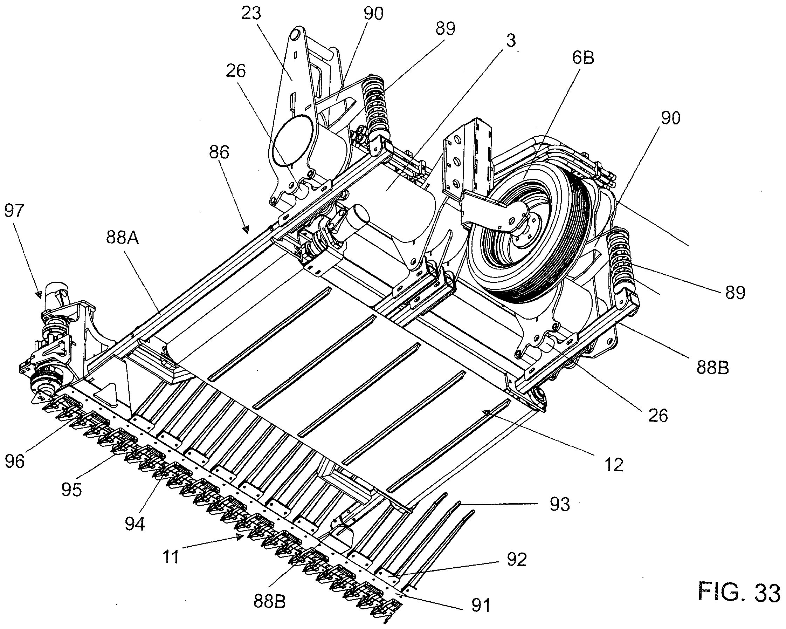

The reaper (11) can be seen in detail in figures 30 to 33, and consists of an oscillatory structure (86) that is also shared by the windrowing set (12). This structure is composed by a set of square stringer tubes organized in two pairs: on the right 87A and 87B, and on the left 88A and 88B; One on each side of opening 4. All of them articulately bound beneath the structure (1) in a seesaw manner, more specifically beneath the tubes (3), and for this purpose are the bearings (26). At the rear end of these stringer tube pairs (87AB and 88AB), you will find vertically and articulately bound spiral spring structures (89), which in turn have their upper end supported by a lying down "V" shaped plate arm fixed and wholly part of support (26). On the other side, the front end of the stringer tube pairs (87AB and 88AB) sustain the actual reaper (11), which can be seen in detail in figure 3. It is composed by an elongated plate piece (91) rigidly fixed in all the frontal ends of the stringer tube pairs (87AB and 88AB), and on its rear edge are located a plurality of support platelets (92), each of these fixed to the base of a inclined orienting fork (93), which ends over the corresponding edge of the windrower set (12). Similarly, the rear edge of this elongated plate piece (91) contains a plurality of fixed equidistant scissors (94), in between which are positioned, in equal number and spacing, a set of cutting teeth (95). There are all fixed in a oscillatory plate piece (96), which in turn has one of its ends coupled to a driving set (97) better illustrated in figure 31. In this figure, it can be better seen that it is composed initially by a setsquare plate support (98) fixed between the plate piece (91) and the stringer tube (88A), and on top of it is a vertical "T" shaped elongation (99), two side plates (100), an intermediate base (101) and an upper base (102). To this last one is fixed a hydraulic engine (103), whose axis with elastic coupling faces down and is coupled to a gear box (104), below which the axis of it is coupled to a cam set (105) which, finally, is articulately attached to the oscillatory plate piece 96), moving it in a way that the cutting teeth (95) can be alternatively moved in between the fixed scissors (94). Consequently, with the forward movement of the machine, the plants enter in between the cutting parts of the reaper (11) and are cut at ground level, and then slide on the orienting forks (93) to be windrowed by set 12. The orienting forks (93) allow impurities such as clods, loose dirt, and stone to pass through them and fall back to the ground, consequently preventing such material to be rowed together with the plants and facilitating its sorting process later on.

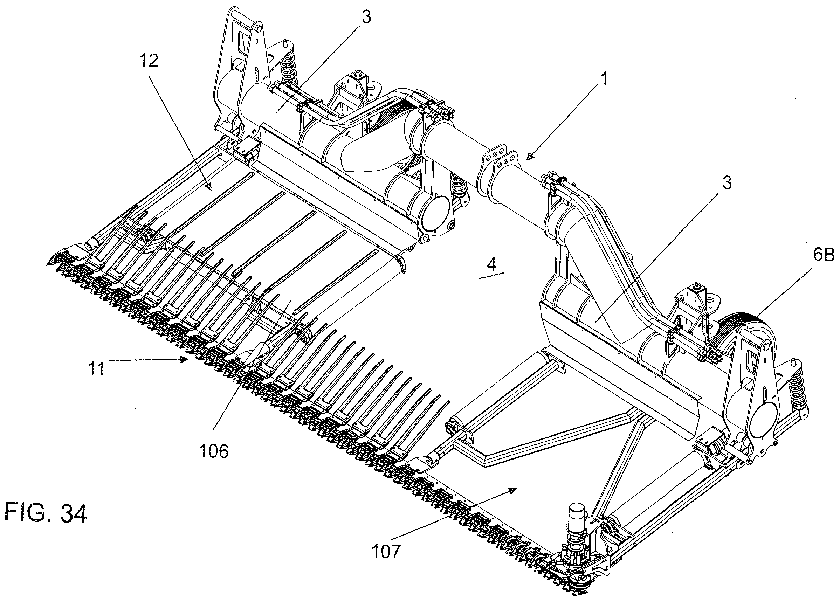

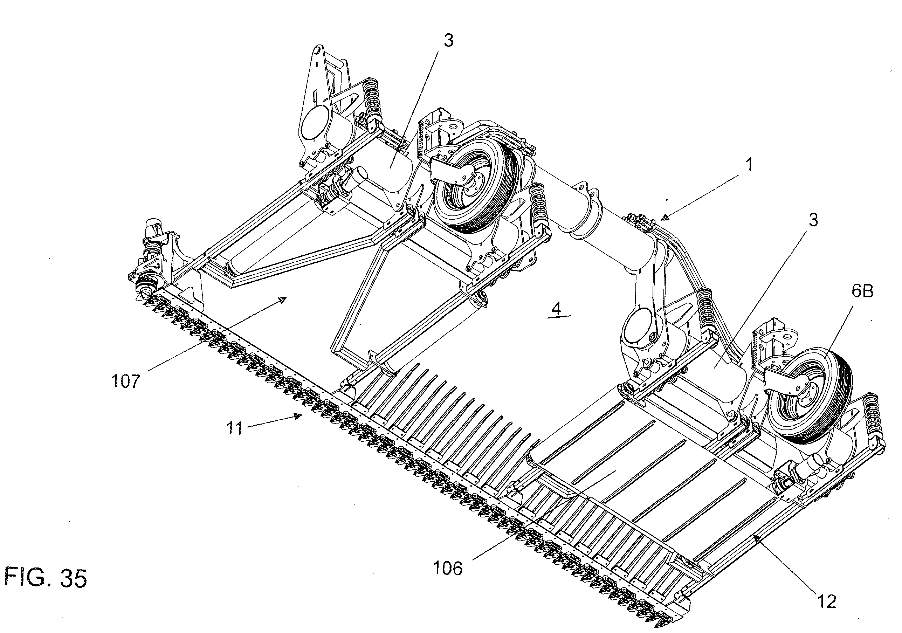

The windrowing set (12) is illustrated in detail in figures 34 and 35. In these, it can be seen that it is transversally positioned between the reaping set (11) and the tube segment (3) of the structure (1), which combines the opening (4) in a way that the reaped plants can pass through it continuously and form the windrows on the ground.

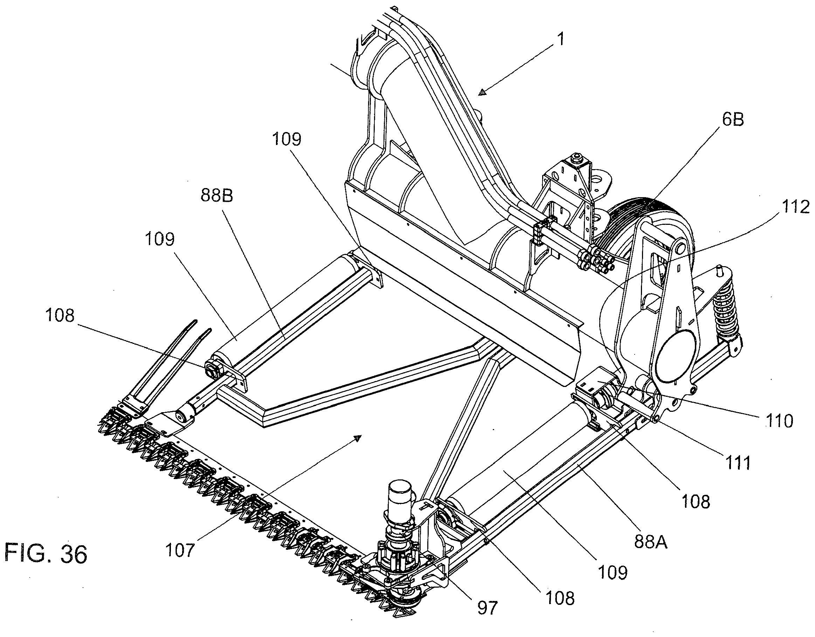

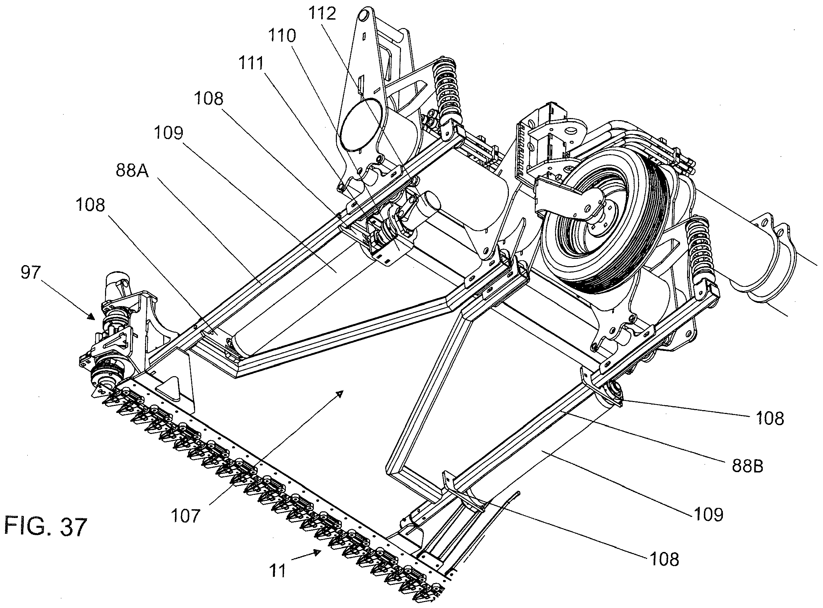

It is formed by two transversally aligned conveyor belts (106), each of these assembled in its complementary structure (107), better visualized in figures 36 and 37. In these figures it can be seen that it is formed by "Y" shaped tubes, whose unified rear end is articulately fixed beneath structure (1), while its frontal ends are angularly folded outwards and welded to the corresponding stringer tube (87AB or 88AB). At this position of the stringer tubes, there is a pair of bearing sockets (108), each pair for a roller (109) positioned parallel to the corresponding pair of stringer tubes (87AB or 88AB) and covered and enveloped by the belt (106). One of these rollers (109) is responsible for traction, and for this, besides having a complementary support (110), is coupled to a hydraulic engine (112) which spins in a direction contrary to its counterpart on the other side of the machine, so that both conveyor belts move toward the opening (4), tossing through it the reaped material which is windrowed on the ground.

Even if not completely illustrated, in reference to figure 1, it is of common understanding that the implement includes an adequate ordinary hydraulic tabulation with all the connections necessary for connecting it to the hydraulic pump of a conventional tractor and the functioning of the hydraulic engines of each set. For as has been described, the vertical cutting set (8), the gathering and lifting set (9) and its lifting and regulating system (10), the reaping set (11) and the windrowing set (12) are all activated by hydraulic engines and pistons which consequently require a hydraulic pump and a control station assembled in a conventional tractor.

It is comprehended that certain characteristic of assembling and dimensional combinations can vary considerably, but maintaining the same functional concept for each set. Consequently, the construction described here in detail as an example is clearly subject to constructive variations. These variations would still be maintained inside the scope of the inventive concept here revealed, including a gathering and lifting roller (9) with a set of combs that move through translation around a fixed structure, considerably increasing the efficiency of the set. As many modifications can be made in the set here described in accordance to the descriptive claims of the law, it is understood that the present details must be interpreted in a illustrative manner, and not a limiting one.

## Claims

1. Implement for reaping and windrowing various cultivations in the form of a lying "U" structure (1) with a gap or free span (4) in between for the passing of material, front (6A) and rear (6B) wheels supporting the side tubes (2) of the structure (1), openers (7) in front of the front wheels, a gathering and lifting set (9), a cutter (8) and a windrowing set (12),
**characterized in that**:
- the lying "U" structure (1) is composed of side tubes (2), parallel and aligned in the same plane and by a connecting rear portion made of two tubular axial segments (3), the structural interconnection of which being completed by an elevated part, also tubular and trapezoid shaped (5), forming the rear elevated part of said structure and which serves as an exit for the windrowed material; and **in that** the frontal wheels (6A) are mounted on the distal ends of the tubes (2), while the rear ones (6B) are mounted on the median tubular segments (3);
- the openers (7) are integrated with the vertical cutter sets (8), mounted in front of each front wheel (6A);
- the gathering and lifting set (9) extends for the whole width of the implement between the frontal wheels (6A), wherein its ends are adjustably attached to oscillatory arms (10) which are placed over the side tubes (3), allowing said gathering and lifting set (9) to be moved vertically and horizontally according to a desired adjustment coherent with the surface of the ground and according to the type of plant being reaped and windrowed, wherein the gathering and lifting set (9) comprises a set of claws distributed in the form of parallel "combs", which are connected by their tips to sliding chains adjusted in lateral and medium structures, practically triangular and with internal gears, the combs being moved by translational movement;
- the reaping set (11) is assembled on the structure (1) in a spring manner, along the entire transversal extension of the machine forming a transversal cutting line kept over the soil, allowing the cutting line to follow the level of the ground; and
- the windrowing set (12) is positioned transversally between the reaping set (11) and the tube segment (3) of the structure (1).

2. Implement for reaping and windrowing various cultivations, according to claim 1, **characterized by** the fact that the tubular structure (1) in lying down "U" shape features various strategic supports for the assembling of the sets previously described, such as plate forks (13) with circular fitting spaces for coupling to the distal extremities of the tubes (2), the forks having its tips facing down and receive complementary plate pieces (14), which have in between them the frontal wheels (6A) with its respective axis and cube; The rear wheels (6B) include supports of similar pressed plates (15), with a circular fitting opening for the tubular segment (3) and prolongations that set up lower bearings (16) and a vertical mirror (17), this mirror levels a vertical mounting support for the height adjustable fixation of a counter plate (18) and a square tube equally vertical (19); On the inside of this square tube is fixed the fork (20) of the wheels (6B), and in this set, there are a pair of flaps (21) which work together with plate rings (22) positioned in the middle part of the trapezoid shaped tube (5), in being the slots used for coupling the implement to the front of the tractor; Other two assembling support sets, (23) and (24), are planned; The first of these interconnects in 90° the rear ends of the side tubes (2) and one of the transversal tubes (3); The other (24) interconnects the upper part of the trapezoid shaped tube (5) with the other corresponding ends of the tubes (3) of the structure (1); All supports (23 and 24) are equally made of parallel plates with the circular openings for the corresponding tube parts of the structure (1) and extend upward and downwards, setting up lower (25, 26) and upper (27) bearings for articulated coupling of the different sets of the implement; Lower bearings (25) for the reaping set (11), lower bearings (26) for the windrowing set (12) and finally upper bearings (27) for the assembling structure (10) of the gathering and lifting set (9).

3. Implement for reaping and windrowing various cultivations, according to claim 1, **characterized by** the fact that the opener sets (7) are integrated with the vertical cutter set (8), assembled in front of each front wheel (6A); Each of these sets is formed by a fixed plurality of plates (28), as if it were a vertical ruler, in whose borders are fixed two equal supports ordinarily "Y" shaped, or in the form of forks (29), these horizontal supports face backwards and the distal tips of their ramification envelop the frontal wheel (6A) and are fixed on the wheel's side plates (14), while by its opposite end it is fixed on the corresponding edge of plate piece (28); On this same edge of plate piece (28), below forks (29), it features a pair of plate pieces positioned in a "V" shape (30), mirrored and equally positioned, from which extend various ribs or rods, (31) which like the forks above it, envelop the front and sides of the front wheels (6A).

4. Implement for reaping and windrowing various cultivations, according to claim 1, **characterized by** the fact that each cutting set (8) is assembled along the frontal edge of plate slab 28, this edge extends forward featuring a row of triangular cutting teeth (32); Two of these are significantly longer, The upper (33) is elongated with an upward inclination, and the bottom one (34) is elongated with a downward inclination, They both also function as guides to funnel the plants toward the triangular cutting teeth (32), which like scissors, function together with another set of moving teeth (35) assembled along a moving plate piece; this piece is mounted in a sliding manner on the inside of strainers (37A) with fixed teeth (37B), fixed on plate piece 28, this way, the mobile teeth (35) stay in between the fixed teeth 37B and 32, said moving plate piece (36) has its upper end guided in between bearings (38) and is orthogonally connected through this same end to a prolonging (39), that by means of articulation (40), is connected to an cam set (41) and its respective triggering set by hydraulic engine (42) assembled on a support (43) that not only serves as a base for the two bearings, (37) but is fixed to plate piece 28.

5. Implement for reaping and windrowing various cultivations, according to claim 1, **characterized by** the fact that the gathering and lifting set (9) consists of a structure defined by a rotating central tubular axis (44), which passes through three boxes of transmission and synchronism, One in the middle (45A) and two at the opposite sides (45B e 45C), beside box 45C is a forth transmission box (45 D), they are all equally aligned and triangular shaped with rounded edges, have the same dimensions and have a vertex pointing up, and a side pointing down; said triangular shaped boxes also feature stabilizing bars (46) with their respective supports (47); At least two bars in each space between the transmission and synchronism boxes (45ABC), boxes that also have its outline equipped with a dragging device, (48) where there are attached many equally distant combs (49) positioned in a parallel manner to travel simultaneously in complete and continuous movement along the outline of said boxes (45ABC), a stable movement that always keeps each comb in a vertical position through a complementary device (50) assembled in the outline of box 45D; In its side facing outward, box 45D has a bearing support (51) for axis 44 and a device for regulating the inclination (52) of the gathering and lifting roller (9), that is, on the external side of box (45B), aside from support 51 and the inclination-regulating device 52, this set (9) sustains and integrates the parts of the triggering set of the rotating axis (44).

6. Implement for reaping and windrowing various cultivations, according to claim 5, **characterized by** the fact that the transmission and synchronism boxes (45A, 45B and 45C) are practically identical, having two walls of metal plate (54), ordinarily triangular with rounded edges, parallel to each other and also spaced apart by segments of "U" shaped profiles (55) facing outward distributed along the three borders, these triangular metal plates also feature pieces that set up a central bearing (56) providing rotating support for an axis (44), and is also the base for a large gear (57) whose diameter is sufficient to coincide with the radius of the rounded upper edge of the corresponding transmission box (45A), (45B) and (45C); On the other two lower rounded edges, in the same manner, are positioned other smaller gears (58) and (59), with bearings in between the two plate walls (54); All three gears together (57, 58 and 59) drive a chain (60) that in turn, passes through the inside of the "U" shaped guides (55) and link to the corresponding support (61) and respective bushings (62), where the combs (49) are rotationally supported and moved by the chain (60).

7. Implement for reaping and windrowing various cultivations, according to claim 5, **characterized by** the fact that the forth transmission box (45D) is set in a position a little bit above the other three boxes, and that it is also made of plate walls (54) spaced apart by "U" shaped guides (55), it includes the same gears 58 and 59, but does not include the large gear in the upper rounded edge; This last one is substituted by another practically semicircular "U" shaped guide (63) in whose interior is the passage of chain 64, in which are coupled all the pantographic devices (50), these devices are crank shaped with a vertical piece (65), they are through one end articulately attached to a support (66), which in turn is fixed on the chain (64), while its other end is rigidly fixed to one of the sides of the corresponding comb (49).

8. Implement for reaping and windrowing various cultivations, according to claim 5, **characterized by** the fact that the support (51) is formed by two bearings orthogonally positioned, an upper (67) and a lower one (68), the first of these is set up by a liner plate piece welded in "U" shape (69), which coupled with a trestle (70), forms a fitting for the swinging arm (10) where the gathering and lifting roller (9) can slide forward and backwards up to an adequate position for its functioning, the second bearing (68) forms a point of articulated anchorage for one of the ends of axis 44, through the triggering set (53).

9. Implement for reaping and windrowing various cultivations, according to claim 5, **characterized by** the fact that the triggering set (53) is formed by a hydraulic engine (71), a transmission of two gears (72 and 73) and a chain (74) and an axis tip (75), this tip is connected to the corresponding end of tubular axis (44), while the opposite end passes through the plate wall (54) and the lower bearing bush (68), receives the larger gear (72) that is interconnected to the smaller gear (73), which in turn is fixed to the axis of the hydraulic engine (71), whose flange is fixed to the support itself (51).

10. Implement for reaping and windrowing various cultivations, according to claim 5, **characterized by** the fact that the inclination regulating devices (52) are set up in the lower bearing bush (68), where a curved slot (76) with a pin (77) and respective locknut (78) are present, this pin is welded in a perpendicular manner to a base (79), which in turn is fixed against the plate wall (54) of the gathering roller (9), and this ways, inside the limit established by the slot (76) radius, said gathering roller (9) is regulated according to the inclination desired.

11. Implement for reaping and windrowing various cultivations, according to claim 1, **characterized by** the fact that each swinging arm (10) is formed by a tube (80), whose rear "T" shaped end (81) is articulately coupled in the bearing (23) of the tubular structure (1), while by the opposite side its end slidingly pierces bearing of support 51, in whose trestle (70) is articulately coupled the end of a hydraulic cylinder (82), which in turn is also articulately fixed over tube (80) by a double bearing piece, this piece, which envelops tube (80), is moved vertically by another hydraulic tube (84), assembled on the inside of a box (85) fixed to the corresponding side tube (3).

12. Implement for reaping and windrowing various cultivations, according to claim 1, **characterized by** the fact that the reaper (11) consists of an oscillatory structure (86) that is also shared by the windrowing set (12) and is composed by a set of square stringer tubes organized in two pairs: on the right 87A and 87B, and on the left 88A and 88B; One on each side of opening 4, all of them articulately bound beneath the structure (1) in a seesaw manner, more specifically beneath the tubes (3), and for this purpose are the bearings (26); At the rear end of these stringer tube pairs (87AB and 88AB) you will find vertically and articulately bound spiral spring structures (89), which in turn have their upper end supported by a lying down "V" shaped plate arm fixed and wholly part of support (26); On the other side, the front end of the stringer tube pairs (87AB and 88AB) sustain the actual reaper (11), formed by an elongated plate piece (91) rigidly fixed in all the frontal ends of the stringer tube pairs (87AB and 88AB), and on its rear edge are located a plurality of support platelets (92), each of these fixed to the base of a inclined orienting fork (93), which ends over the corresponding edge of the windrower set (12); Similarly, the rear edge of this elongated plate piece (91) contains a plurality of fixed equidistant scissors (94), in between which are positioned, in equal number and spacing, a set of cutting teeth (95) which are all fixed in a oscillatory plate piece (96), which in turn has one of its ends coupled to a driving set (97), composed initially by a setsquare plate support (98) fixed between the plate piece (91) and the stringer tube (88A), and on top of it is a vertical "T" shaped elongation (99), two side plates (100), an intermediate base (101) and an upper base (102); To this last one is fixed a hydraulic engine (103), whose axis with elastic coupling faces down and is coupled to a gear box (104), below which the axis of it is coupled to a cam set (105) which, finally, is articulately attached to the oscillatory plate piece 96.

13. Implement for reaping and windrowing various cultivations, according to claim 1, **characterized by** the fact that the windrowing set (12) is formed by two transversally aligned conveyor belts (106), each of these assembled in its complementary structure (107) formed by "Y" shaped tubes, whose unified rear end is articulately fixed beneath structure (1), while its frontal ends are angularly folded outwards and welded to the corresponding stringer tube (87AB or 88AB); At this position of the stringer tubes, there is a pair of bearing sockets (108), each pair for a roller (109) positioned parallel to the corresponding pair of stringer tubes (87AB or 88AB) and covered and enveloped by the belt (106), one of these rollers (109) is responsible for traction, and for this, besides having a complementary support (110), is coupled to a hydraulic engine (112) which spins in a direction contrary to its counterpart on the other side of the machine, so that both conveyor belts move toward the opening (4).

## Patentansprüche

1. Einrichtung zum Ernten und Ballen von verschiedener Pflanzen in Form einer liegenden Struktur in "U" (1) mit einer Lücke oder einem freien Intervall (4) in der Mitte für Materialdurchgang, Vorder- und (6A) Hinterräder (6B) der der Seitenrohre (2) des Rahmens stüzt (1), Öffner (7) vor den Vorderrädern, eine Sammel- und Hebevorrichtung (9), eine Schneidvorrichtung (8) und eine Ballenpreßvorrichtung (12) gebaut,
sodass in:
- die liegende Struktur in "U" (1) besteht aus parallelen und in derselben Ebene ausgerichteten Seitenrohren (2), und einem hinteren Verbindungsabschnitt aus zwei axialen rohrförmigen Segmenten (3), sodass die strukturelle Verbindung durch einen erhöhten Teil, ebenfalls in rohrförmigen und trapezförmigen (5), vervollständigt wird, sodass der hintere erhabene Teil der Struktur gebildet wird und als ein Auslass für das Ballenmaterial dient; und, sodass für die Vorderräder (6A) sind an den distalen Enden der Rohre (2) angebracht, während die hinteren (6B) in den medialen Rohrsegmenten angebracht sind (3);
- die öffner (7) sind in die vertikalen Schneidanordnungen (8) integriert, die vor jedem Vorderrad angebracht sind (6A);
- die sammel- und Hebeanordnung (9) erstreckt sich über die gesamte Länge des Geräts zwischen den Vorderrädern (6A), deren Enden einstellbar an den Schwingarmen (10) angebracht sind, die an den Seitenrohren (3) angeordnet sind; das ermöglicht, dass die Sammel- und Hebeanordnung (9) vertikal und horizontal gemäß einer gewünschten Passung in Übereinstimmung mit der Bodenoberfläche und gemäß der Art der Pflanze, die geerntet und gebündelt wird, bewegt werden kann, sodass die Ernte- und Hebeanordnung (9) umfaßt einen Satz von Krallen, die in Form von parallelen "Kämmen" verteilt sind, die mit ihren Spitzen mit den Gleitketten verbunden sind, die in den Seiten- und Mittelstrukturen praktisch dreieckig und mit Innenzahnrädern sind, sodass die Kämme durch Translationsbewegung bewegt werden;
- die erntegutanordnung (11) ist an der Struktur (1) entlang der gesamten Quererstreckung der Maschine federartig montiert, wobei sie eine querverlaufende Schnittlinie bildet, die auf dem Boden gehalten wird, so dass die Schnittlinie dem Erdeniveau verfolgt; und
- die Ballenpreßanordnung (12) ist quer zwischen der Sammelanordnung (11) und dem Rohrsegment (3) der Struktur angeordnet.

2. Einrichtung zum Ernten und Ballen von verschiedenen Pflanzen nach Anspruch 1, **dadurch gekennzeichnet, dass** die liegende rohrförmige Struktur in "U" (1) verschiedene strategische Stützen zum Zusammenbauen der zuvor beschriebenen Anordnungen hat, wie zum Beispiel Gabeln für Platte (13) mit kreisförmigen Einstellräumen für den Eingriff der distalen Enden der Rohre (2), die Gabeln mit den Unterseiten und die Aufnahme der komplementären Plattenstücke (14), zwischen denen die Vorderräder (6A) angeordnet sind, mit ihrer jeweiligen Achse und Würfel; Die Hinterräder (6B) umfassen ähnliche gepresste Plattenhalter (15), mit einer kreisförmiger Einstellöffnung für das röhrenförmige Segment (3) und Verlängerungen, die untere Lager (16) und einen vertikalen Spiegel (17) bilden, und die Spiegelebenen bilden eine vertikale Halterung zur höhenverstellbaren Fixierung einer Gegenplatte (18) und eines ebenfalls vertikalen Vierkantrohres (19); In dem inneren Teil dieses Vierkantrohres ist die Gabel (20) der Räder (6B) befestigt, und in diesem Satz gibt es ein Paar Klappen (21), die mit den im mittleren Teil des Rohres positionierten Plattenringen (22) zusammenwirken (5), in der Mitte die Schlitze, die verwendet werden, um das Gerät vor dem Traktor anzukuppeln; Die anderen zwei Montagehalteranordnungen (23) und (24) sind entworfen; Die erste dieser Verbindungen verbindet die hinteren Enden der Seitenrohre (2) und eines der Querrohre (3) um 90 °; Die andere (24) verbindet den oberen Teil der trapezförmigen Röhre (5) mit anderen entsprechenden Enden der Röhren (3) der Struktur (1); Alle Stützen (23 und 24) bestehen ebenfalls aus parallelen Platten mit den kreisförmigen Öffnungen für die entsprechenden Rohrteile des Rahmens (1) und erstrecken sich nach oben und unten, und bilden die untere Lager (25, 26) und obere (27) zur gelenkigen Kopplung der verschiedenen Einrichtunganordnungen; Die unteren Lager (25) für die Ernteanordnung (11), die unteren Lager (26) für die Ballenpreßanordnung (12) und schließlich die oberen Lager (27) für die Zusammenbauanordnung (10) der Sammel- und Hebeanordnung (9).

3. Einrichtung zum Ernten und Ballen von verschiedenen Pflanzen nach Anspruch 1, **dadurch gekennzeichnet, dass** die Öffneranordnungen (7) in die vertikale Schneidanordnung (8) integriert sind, die vor jedem Vorderrad (6A) angebracht ist; Jede dieser Anordnungen wird durch eine feste Mehrzahl von Platten (28) gebildet, als ob es eine vertikale Regel wäre, in deren Grenzen zwei im allgemeinen Y-förmige Halter oder in der Form von Gabeln (29) befestigt sind, diese horizontalen Halter bleiben zurück und die distalen Enden seines Zweiges das ganze Vorderrad (6A) umhüllt, und sind an den Seitenplatten des Rades (14) befestigt, während es an seinem gegenüberliegenden Ende an der entsprechenden Kante des Blechteils (28) befestigt ist; An der gleichen Kante des Blechteils (28) unterhalb der Gabeln (29) ist ein Paar Blechteile dargestellt, die in einer spiegelähnlichen und gleichmäßig positionierten "V"-Form (30) angeordnet sind, (31) die wie die Gabeln über ihnen die Vorder- und Seiten der Vorderräder (6A) umhüllen.

4. Einrichtung zum Ernten und Ballen von verschiedenen Pflanzen nach Anspruch 1, **dadurch gekennzeichnet, dass** jede Schneidanordnung (8) entlang der Vorderkante der Blechklinge (28) montiert ist, sodass die Kante sich nach vorne erstreckt und eine Reihe von dreieckigen Zähnen (32) darstellt; Zwei von diesen sind signifikant länger, das obere (33) ist länglich mit einer Aufwärtsneigung, und der Boden (34) ist länglich mit einer Abwärtsneigung; beide dienen auch als Führungen, um die Pflanzen in Richtung der dreieckigen Zähne zu lenken (32), die als Schere mit einem anderen Satz beweglicher Zähne (35) zusammenwirken, die entlang eines beweglichen Blechteils angebracht sind; dieser Teil ist verschiebbar auf der Innenseite von Verformungen (37A) mit festen Zähnen (37B) montiert, die an dem Plattenteil (28) befestigt sind, wobei die beweglichen Zähne (35) zwischen den festen Zähnen (37B) und (32) sind, der entsprechende Teil (36) hat das Ende des beweglichen Blattelements (36) zwischen den Lagern (38) geführt ist, und orthogonal durch dasselbe Ende mit einer Verlängerung (39) verbunden ist, die mittels des Gelenks (40) mit einem Satz von Nocken (41) und seiner jeweiligen hydraulischen Motorantriebsanordnung (42) verbunden sind, die auf einem Halter (43) montiert sind, der nicht nur als Basis für die zwei Lager (37) dient, sondern auch für die Befestigung an dem Blechteil (28).

5. Einrichtung zum Ernten und Ballen von verschiedenen Pflanzen nach Anspruch 1, **dadurch gekennzeichnet, dass** die Ernte- und Hebeanordnung (9) aus einer Struktur besteht, die durch eine zentrale rotierende Rohrwelle (44) definiert ist, die durch drei Getriebe und Synchronismussysteme verläuft, eine in der Mitte (45A) und zwei auf den gegenüberliegenden Seiten (45B und 45C); neben dem Getriebe 45C befindet sich ein Vorwärtsgetriebe (45D), die alle gleich ausgerichtet sind und in Dreiecksform mit abgerundeten Kanten die gleichen Abmessungen haben, und einen Scheitelpunkt mit der Spitze nach oben und eine Seite nach unten haben; diese dreieckig geformten Kartons zeigen auch Stabilisatorstangen (46) mit ihren jeweiligen Halterungen (47); Mindestens zwei Stäbe in jedem Raum zwischen den Getriebe und Synchronismussysteme (45ABC), wobei die Kästen ebenfalls ihre Kontur aufweisen, die mit einer Schleppvorrichtung (48) ausgestattet sind, wo viele gleich distale Kämme (49) parallel zueinander positioniert sind, um sich gleichzeitig in vollständiger und kontinuierlicher Bewegung entlang der Kontur der entsprechenden Getriebe (45ABC) zu bewegen, eine stabile Bewegung, die jeden Kamm immer in einer vertikalen Position durch eine komplementäre Vorrichtung (50) hält, die an der Kontur des Getriebes 45D angebracht ist. Auf seiner Außenseite hat das Getriebe (45D) eine Lagerstütze (51) für die Achse (44) und eine Vorrichtung zum Regulieren der Neigung (52) des Aufnahmezylinders (9), d.h. auf der Außenseite des Getriebes (45B), getrennt von der Halterung (51) und der Neigungseinstellvorrichtung (52), trägt und integriert diese Anordnung (9) die Teile der Antriebsanordnung der Drehwelle (44).

6. Einrichtung zum Ernten und Ballen von verschiedenen Pflanzen nach Anspruch 5, **dadurch gekennzeichnet, dass** die Getriebe und Synchronismussysteme (45A, 45B und 45C) im Wesentlichen identisch sind, mit zwei Wänden allgemeinen dreieckigen (54) Metallplatte. Diese dreieckigen Metallplatten mit zueinander abgerundeten Kanten, die ebenfalls durch drei U-förmig über drei Ränder verteilte U-Profile (55) beabstandet sind, stellen auch Teile dar, die ein tragendes zentrales Lager (56) bilden, für eine Achse (44), die drehbar ist, und ist auch die Basis für ein größeres Zahnrad (57), dessen Durchmesser ausreicht, um zu dem Radius der abgerundeten oberen Kante des entsprechenden Getriebes (45A), (45B) und (45C) zu passen; In den anderen zwei abgerundeten unteren Kanten sind ebenfalls andere kleinere Zahnräder (58) und (59) positioniert, wobei die Lager zwischen den zwei Blechwänden (54) sind; Alle drei Zahnräder (57, 58 und 59) treiben eine Kette (60) an, die ihrerseits durch die Innenseite der "U"-förmigen Führungen (55) hindurchtritt und sich mit dem entsprechenden Halter (61), und entsprechende Buchsen (62) verbindet, wobei die Kämme (49) durch die Kette (60) drehbar getragen und bewegt werden.

7. Einrichtung zum Ernten und Ballen von verschiedenen Pflanzen nach Anspruch 5, **dadurch gekennzeichnet, dass** das Vorwärtsgetriebe (45D) an einer Stelle ein wenig oberhalb der anderen drei Getriebe definiert ist, und welches ebenfalls aus Blechwänden besteht (54), der durch "U"-förmige Führungen (55) beabstandet ist, einschliesslich die gleichen Zahnräder 58 und 59, enthält jedoch nicht das große Zahnrad an der oberen abgerundeten Kante; diese letzte wird durch eine andere im wesentlichen halbkreisförmige "U"-förmige Führung (63) ersetzt, in deren Innerem der Durchgang der Kette (64) liegt, in den alle Pantographenvorrichtungen (50) eingekoppelt sind, wobei diese Vorrichtungen einteilig gekurbelt sind (65) sind sie durch ein Ende gelenkig an einem Halter (66) befestigt, der seinerseits an der Kette (64) befestigt ist, während sein anderes Ende starr an einer Seite des entsprechenden Kamms befestigt ist (49).

8. Einrichtung zum Ernten und Ballen von verschiedenen Pflanzen nach Anspruch 5, **dadurch gekennzeichnet, dass** der Halter (51) durch zwei orthogonal positionierte Lager gebildet ist, ein oberes (67) und ein unteres (68), von denen das erste ist durch ein Stück "U"-förmig verschweißte Auskleidung (69) gebildet, die mit einem Ständer 70 verbunden wurde, und bildet eine Anpassung an den Schwenkarm (10), wo die Aufnehmerrolle (9), kann zu einer für seinen Betrieb geeigneten Position hin und her gleiten, wobei das zweite Lager (68) einen Ankerpunkt bildet, der an einem Ende der Welle (44) durch die Antriebsanordnung angelenkt ist (53).

9. Einrichtung zum Ernten und Ballen verschiedener Pflanzen nach Anspruch 5, **dadurch gekennzeichnet, dass** die Antriebsanordnung (53) durch einen Hydraulikmotor (71), ein Getriebe aus zwei Zahnrädern (72 und 73) und eine Kette gebildet ist (74), und einer Achsenspitze (75), wobei diese Spitze mit dem entsprechenden Ende der rohrförmigen Welle (44) verbunden sind, während das gegenüberliegende Ende durch die Blechwand (54) und die untere Lagerbuchse verläuft das Hauptzahnrad (72), das mit dem Nebenzahnrad (73) verbunden ist, das seinerseits an der Achse des Hydraulikmotors (71) befestigt ist, dessen Flansch an dem Halter (51) selbst befestigt ist.

10. Einrichtung zum Ernten und Ballen von verschiedenen Pflanzen nach Anspruch 5, **dadurch gekennzeichnet, dass** die Neigungsregulierungsvorrichtungen (52) in der unteren Lagerbuchse (68) angeordnet sind, wobei ein gekrümmter Schlitz (76) mit einem Stift (77) und dessen Kontermutter (78) vorhanden sind, wird dieser Stift senkrecht zu einer Basis (79) geschweißt, die wiederum gegen die Blechwand (54) des Pflückzylinders (9) gesichert ist, und somit wird die Pflückwalze (9) innerhalb der durch den Radius des Schlitzes (76) festgelegten Grenze entsprechend der gewünschten Neigung eingestellt.

11. Einrichtung zum Ernten und Ballen von verschiedenen Pflanzen nach Anspruch 1, **dadurch gekennzeichnet, daß** jeder Schwenkarm (10) durch ein Rohr (80) gebildet ist, dessen hinteres "T"-förmiges Ende (81) schwenkbar an dem Lager (23) der rohrförmigen Struktur (1) verbunden ist, während auf der gegenüberliegenden Seite sein Ende gleitend das Stützlager (51) bohrt, in dem der Sattel (70) schwenkbar mit dem Ende eines Hydraulikzylinders (82) gekoppelt ist, der wiederum drehbar an dem Rohr (80) durch ein doppeltes Lagerstück angebracht ist, wobei das Stück, das das Rohr (80) umhüllt, vertikal durch ein anderes hydraulisches Rohr (84) bewegt wird, das an der Innenseite eines Kartons angebracht ist (85) an dem entsprechenden Seitenrohr (3) befestigt.

12. Einrichtung zum Ernten und Ballen von verschiedenen Pflanzen nach Anspruch 1, **dadurch gekennzeichnet, dass** der Mäher (11) aus einer oszillierenden Struktur (86) besteht, die auch von der Ballenpresse (12) geteilt wird, und besteht aus einem Satz von quadratischen Strahlröhren, die in zwei Paaren angeordnet sind: auf der rechten Seite 87A und 87B und auf der linken Seite 88A und 88B; Eine auf jeder Seite der Öffnung 4, die alle unterhalb der Struktur (1), genauer gesagt unterhalb der Rohre (3), schwenkbar verbunden sind, und die Lager (26) da sind zu diesem Zweck; Am hinteren Ende dieser Strebenstrangpaare (87AB und 88AB) befinden sich vertikale und schwenkbar befestigte Spiralfederstrukturen (89), die ihrerseits mit ihrem oberen Ende durch einen Blecharm in Form "V" gehalten sind, flach liegend und vollständig Teil der Stütze (26); Auf der anderen Seite trägt das vordere Ende der Strebenrohrpaare (87AB und 88AB) den eigentlichen Mäher (11), der durch ein längliches Blechelement (91) gebildet ist, das starr an allen vorderen Enden des Holmstorus befestigt ist (87AB und 88AB), und an seiner Hinterkante ist eine Vielzahl von Stützplättchen (92) angeordnet, die jeweils an der Basis einer geneigten Ausrichtungsgabel (93) befestigt sind, deren Enden sich an der entsprechenden Kante der Ballenpressenanordnung (12) befinden. In ähnlicher Weise enthält die hintere Kante dieses länglichen Blattelements (91) eine Vielzahl von stationären äquidistanten Scheren (94), zwischen denen in gleicher Anzahl und gleichen Abständen ein Satz von Schneidzähnen (95) angeordnet ist, die an ein oszillierendes Plattenelement (96) befestigt sind, das seinerseits mit einem Ende mit einer Antriebsanordnung (97) verbunden ist, die anfänglich aus einem quadratischen Plattenträger (98) besteht, der zwischen dem Plattenelement (91) befestigt ist, und eine obere Basis (102) hat eine vertikale "T"-förmige Verlängerung (99), zwei Seitenplatten (100), eine Zwischenbasis (101) und eine obere Basis (102); In diese letzte ist ein hydraulischer Motor (103) befestigt, wobei die Welle mit elastischer Kupplung nach unten steht und mit einem Getriebe (104) gekoppelt ist, unterhalb dessen seine Achse mit einer Nockenanordnung (105) gekoppelt ist, die schließlich ist schwenkbar an dem Schwingplattenteil 96 befestigt.

13. Einrichtung zum Ernte und Ballen nach Anspruch 1, **dadurch gekennzeichnet, daß** die Ballenanordnung (12) durch zwei quer ausgerichtete Förderbänder (106) gebildet ist, die jeweils in ihrer komplementären Struktur (107) angebracht sind, mit "Y"-förmige Rohre, deren vereinigtes hinteres Ende schwenkbar unterhalb der Struktur (1) befestigt ist, während ihre vorderen Enden nach außen abgewinkelt und mit dem entsprechenden Strebenrohr (87AB oder 88AB) verschweißt sind; In dieser Position der Strebenrohre befindet sich ein Paar Lagerbuchsen (108), wobei jedes Paar für einen Zylinder (109) parallel zu dem entsprechenden Paar von Strebenrohren (87AB oder 88AB) positioniert ist, und von dem Band (106) bedeckt und umhüllt ist; einer dieser Zylinder (109) ist für die Traktion verantwortlich und ist dazu, zusätzlich zu einer komplementären Stütze (110), mit einem Hydraulikmotor (112) gekoppelt, der ihn gegen den Uhrzeigersinn auf der anderen Seite der Maschine dreht, so dass beide Förderbänder sich in Richtung der Öffnung (4) bewegen.

## Revendications

1. Outil pour cueillir et fardeler plusieurs cultures sous la forme d'une structure en "U" allongé (1) avec un écart ou un intervalle libre (4) au milieu, pour le passage de matériel, roues avant (6A) et arrière (6B) soutenant les tubes latéraux (2) de la structure (1), les ouvreurs (7) devant les roues avant, un ensemble de récolte et de soulevage (9), un coupeur (8) et un ensemble de javelage (12), caractérisé en que:
- la structure en "U" allongée (1) est composée par des tubes latéraux (2), parallèles et alignés sur le même plan et par une part arrière de connexion composée par deux segments axiaux tubulaires (3), dont l'interconnexion structurelle étant complétée par une partie élevée, également en format tubulaire et trapézoïde (5), forme la partie élevée arrière de la structure en question et sert de sortie pour le matériel fardelé; de façon à ce que les roues avant (6A) soient assemblées sur les extrémités distales des tubes (2), tandis que les roues arrières (6B) soient assemblées sur les segments tubulaires moyens (3);
- les ouvreurs (7) sont intégrés aux ensembles de coupeur vertical (8), assemblés sur la partie avant de chaque roue frontale (6A);
- l'ensemble de récolte et de soulevage (9) se prolonge sur toute la longueur de l'outil entre les roues frontales (6A), où leurs extrémités sont annexées de façon ajustable aux bras oscillatoires (10) qui sont placés sur les tubes latéraux (3), permettant que l'ensemble de récolte et de soulevage en question (9) puisse être déplacé verticalement et horizontalement, suivant l'ajustement souhaité, en accord avec la surface du sol et selon le type de plante étant cueillie et fardelée, où l'ensemble de récolte et de soulevage (9) comprend un ensemble de griffes distribué sous la forme de "peignes" parallèles, ces dernières étant connectées par leurs pointes aux courants de glissement, ajustées sur les structures latérales et moyennes, pratiquement triangulaires et avec des engrenages internes, les peignes étant mouvementés par un mouvement translationnel;
- l'ensemble de récolte (11) est assemblé sur la structure (1), comme un ressort, tout au long de l'extension transversale de la machine, formant une ligne de coupe transversale, maintenue sur le sol, permettant que la ligne suive le niveau du sol; et
- l'ensemble de javelage (12) est placé transversalement entre l'ensemble de récolte (11) et le secteur de tube (3) de la structure (1).

2. Outil pour cueillir et fardeler plusieurs cultures, selon la revendication 1, **caractérisé par le fait que** la structure tubulaire (1) en format de "U" allongé représente plusieurs supports stratégiques pour l'assemblage des ensembles décrits au préalable, telles que, fourches de plaque en métal (13) avec des espaces d'ajustement circulaire qui puissent s'accoupler aux extrémités distales des tubes (2), les fourches avec les pointes tournées vers le bas et reçoivent les pièces de plaque en métal complémentaires (14), ces dernières ayant entre elles, les roues frontales (6A) avec leur essieu et cube respectifs; les roues arrière (6B) comprennent les supports de plaques en métal similaires pressionnées (15), avec une ouverture d'ajustement circulaire pour le segment tubulaire (3) et des prolongements qui configurent les roulements inférieurs (16) et un miroir vertical (17), ce miroir nivelle un support d'assemblage vertical pour la fixation réglable de hauteur d'une contre-plaque (18) et d'un tube carré, également vertical (19); Sur la partie interne de ce tube carré, la fourche (20) des roues est fixée (6B), et, sur cet ensemble, il existe une paire de rabats (21) qui travaille ensemble avec les anneaux de la plaque en métal (22) placés sur la partie moyenne du tube, en format de trapézoïde (5) ; au milieu, se trouvent les fentes utilisées pour accoupler l'outil sur la partie avant du tracteur. Les deux autres supports d'assemblage, (23) et (24), sont planifiés; le premier d'entre eux, interconnecte à 90° les extrémités arrière des tubes latéraux (2) et l'un des tubes transversaux (3); l'autre (24) interconnecte la partie supérieure du tube en format de trapézoïde (5) avec les autres extrémités correspondantes des tubes (3) de la structure (1); Tous les supports (23 et 24) sont également faits en plaques en métal parallèles, avec des ouvertures circulaires vers les parties correspondantes du tube de la structure (1) et s'étendent vers le haut et vers le bas, tout en configurant les roulements inférieurs (25, 26) et supérieurs (27) pour l'accouplement articulé des divers ensembles de l'outil. Les roulements inférieurs (25) pour l'ensemble de la récolte (11), les roulements inférieurs (26) pour l'ensemble de javelage (12) et finalement, les roulements supérieurs (27) pour la structure de l'assemblage (10) de l'ensemble de récolte et de soulevage (9).

3. Outil pour cueillir et fardeler plusieurs cultures, selon la revendication 1, **caractérisé par le fait que** les ensembles d'ouvreurs (7) sont intégrés à l'ensemble de coupeur vertical (8), assemblé sur la partie avant de chaque roue avant (6A); Chacun de ces ensembles est composé par une pluralité fixe de plaques en métal (28), comme s'il s'agissait d'une règle verticale, dont les frontières ont deux supports égaux apposés ordinairement en format de "Y", ou en forme de fourches (29), ces supports horizontaux se trouvent sur la partie arrière et les pointes distales de leur ramification, enveloppe la roue frontale (6A) et sont fixées sur les plaques en métal latérales de la roue (14), tandis que par leur extrémité opposée, la pièce de la plaque en métal est fixée sur la bordure correspondante (28); Sur cette même bordure de la pièce de la plaque en métal (28), au-dessous des fourches (29), il existe une paire de pièces de plaques placée en format de "V" (30), en miroir et également placées, à partir desquelles s'étendent plusieurs côtes ou tiges, (31) qui, de la même façon que les fourches au-dessus de ces dernières , enveloppent la partie avant et les latérales des roues avant (6A).

4. Outil pour cueillir et fardeler plusieurs cultures, selon la revendication 1, **caractérisé par le fait que** chacun de ces ensembles de coupe (8) est assemblé tout au long du bord avant de la lame de la plaque en métal 28, ce bord s'étendant vers l'avant et représentant une ligne de dents triangulaires de coupe (32); Deux d'entre eux sont significativement plus longs, le supérieur (33) est allongé avec une inclinaison vers le haut et celui du fond (34) est allongé avec une inclinaison vers le bas. Les deux fonctionnent en tant que guides pour canaliser les plantes vers les dents triangulaires de coupe (32); ces dernières, comme des ciseaux, fonctionnent conjointement avec un autre ensemble de dents mobiles (35) assemblé au long d'une pièce mobile de la plaque en métal; cette pièce est assemblée de façon glissante sur la partie interne des passoires (37A) avec des dents fixes (37B), fixées sur la pièce de la plaque en métal 28; ainsi, les dents mobiles (35) restent entre les dents fixes 37B et 32, la pièce mobile de la plaque en métal en question (36) a son extrémité supérieure guidée entre les roulements (38) et est connectée de façon orthogonale par cette même extrémité vers un prolongement (39), qui, par le biais d'une articulation (40), est connectée à un ensemble de came (41) et son respectif ensemble d'actionnement par moteur hydraulique (42) assemblé sur un support (43) qui non seulement sert de base pour les deux (37) mais est fixé sur la pièce de la plaque en métal 28.

5. Outil pour cueillir et fardeler plusieurs cultures, selon la revendication 1, **caractérisé par le fait que** l'ensemble de cueillette et de soulevage (9) consiste en une structure définie par un essieu tubulaire central giratoire (44), qui passe par trois boîtes de transmission et de synchronisme. Un au milieu (45A) et deux sur les côtés opposés (45B et 45C); à côté de la boîte 45C, il existe une boîte de transmission (45 D), tous également alignés et en format triangulaire avec les bords arrondis, ils ont les mêmes dimensions et ont un sommet avec la pointe vers le haut et une latérale tournée vers le bas; les boîtes en question en format triangulaire représentent également des barres stabilisatrices (46) avec leurs supports respectifs (47); Au moins deux barres dans chaque espace entre les boîtes de transmission et de synchronisme (45ABC), des boîtes qui ont également leur contour équipé avec un dispositif de glissage, (48) sur lesquelles sont annexés des peignes également distants (49) placés d'une façon parallèle pour parcourir de façon simultanée et en mouvement complet et continu tout au long du contour des boîtes en question (45ABC), avec un mouvement stable qui maintiendra toujours chaque peigne dans une position verticale par un dispositif complémentaire (50) assemblé sur le contour de la boîte 45D; Sur sa partie latérale, vers l'extérieur, la boîte 45D a un support de roulement (51) vers l'essieu 44 ainsi qu'un dispositif pour ajuster l'inclinaison (52) du cylindre de collecte et le soulevage (9), c'est-à-dire, sur le côté extérieur de la boîte (45B), séparé du support 51 et le dispositif d'ajustement de l'inclinaison 52, cet ensemble (9) soutient et intègre les parties de l'ensemble d'actionnement de l'essieu giratoire (44).

6. Outil pour cueillir et fardeler plusieurs cultures, selon la revendication 5, **caractérisé par le fait que** les boîtes de transmission et de synchronisme (45A, 45B et 45C) sont pratiquement identiques, avec deux parois de plaque en métal (54), ordinairement triangulaires avec des bords arrondis, parallèles entre eux et également espacées par des segments de profils en format de "U" (55), distribués au long de trois frontières; ces plaques triangulaires en métal représentent également des pièces qui représentent un roulement central (56) fournissant un support rotatif pour un essieu (44), et est également la base pour un engrenage plus important (57) dont le diamètre est suffisant pour coïncider avec le rayon du bord supérieur arrondi de la boîte de transmission correspondante à la boîte (45A), (45B) et (45C); Sur les deux autres bords arrondis inférieurs, de la même façon, deux autres engrenages plus petits sont placés (58) et (59), avec des roulements entre les deux murs de la plaque (54); L'ensemble des trois engrenages (57, 58 et 59) actionne un courant (60) qui, à son tour, passe par la partie interne des guides en format de "U" (55) et se relient au support correspondant (61) et aux respectives douilles (62), où les peignes (49) sont supportés de façon rotative et mouvementés par le courant (60).

7. Outil pour cueillir et fardeler plusieurs cultures, selon la revendication 5, **caractérisé par le fait que** la boîte de transmission ci-dessous (45D) soit définie dans une position un peu au-dessus des trois autres boîtes et qui est également faite de parois de plaque en métal (54) espacées par des guides en format de "U" (55), et inclut les mêmes engrenages 58 et 59, cependant, elle n'inclut pas le grand engrenage sur le bord arrondi supérieur; Cette dernière est remplacée par un autre guide en format de "U" , pratiquement semi-circulaire (63) à l'intérieur duquel il existe le passage du courant 64, dans lequel sont accouplés tous les dispositifs pantographiques (50), ces dispositifs sont en format de manivelle avec une pièce verticale (65), ils se situent à une extrémité annexée de façon articulée, à un support (66), qui, à son tour, est fixé sur le courant (64), tandis que son autre extrémité est fixée de façon rigide sur l'un des côtés du peigne correspondant (49).

8. Outil pour cueillir et fardeler plusieurs cultures plusieurs cultures, selon la revendication 5, **caractérisé par le fait que** le support (51) soit composé par deux roulements, posés de façon orthogonale, un supérieur (67) et un inférieur (68), le premier d'entre eux est configuré par une pièce de plaque en métal de revêtement soudée en format de "U" (69), qui s'est accouplée à un chevalet (70), forme une adaptation vers le bras oscillant (10) où le cylindre de collecte et de soulevage (9) peut glisser vers l'avant et vers l'arrière, jusqu'à une position adéquate pour son fonctionnement, le second roulement (68) forme un point d' ancrage articulé vers l'une des extrémités de l'essieu 44, par l'ensemble d'actionnement (53).

9. Outil pour cueillir et fardeler plusieurs cultures, selon la revendication 5, **caractérisé par le fait que** l'ensemble d'actionnement (53) soit formé par un moteur hydraulique (71), une transmission de deux engrenages (72 e 73) et un courant (74) et une pointe de l'essieu (75), cette pointe est connectée à l' extrémité correspondante de l'essieu tubulaire (44), tandis que l'extrémité opposée passe par le mur de la plaque en métal (54) et la douille inférieure (68), reçoit l'engrenage plus important (72) qui est interconnecté à l'engrenage plus petit (73), qui, à son tour, est fixé sur l'essieu du moteur hydraulique (71), dont la bride est fixée sur le propre support (51).

10. **Outil** pour cueillir et fardeler plusieurs cultures, selon la revendication 5, **caractérisé par le fait que** les dispositifs régulateurs de l'inclinaison (52) sont configurés sur la douille de roulement inférieur (68), où une fente courbée (76) avec une goupille (77) et le respectif contre-écrou (78) existent, cette goupille est soudée de façon perpendiculaire à une base (79), qui, à son tour, est fixée contre le mur de la plaque en métal (54) du cylindre de cueillette (9), et, ainsi, dans la limite établie par le rayon de la fente (76), le cylindre de cueillette en question (9) est réglé selon l'inclinaison souhaitée.

11. Outil pour cueillir et fardeler plusieurs cultures, selon la revendication 1, **caractérisé par le fait que** chaque bras oscillant (10) soit composé par un tube (80), dont l'extrémité en format de "T" arrière (81) soit accouplée de façon articulée sur le roulement (23) de la structure tubulaire (1), tandis que, par le côté opposé, son extrémité opposée perfore de façon glissante, le roulement de support 51, dont le chevalet (70) est accouplé de façon articulée à l'extrémité d'un cylindre hydraulique (82), qui, à son tour, est fixé de façon articulée sur le tube (80) par une pièce double de roulement, cette pièce qui enveloppe le tube (80), est mouvementée de façon verticale par un autre tube hydraulique (84), assemblé sur la partie interne d'une boîte (85), fixée au tube latéral correspondant (3).

12. Outil pour cueillir et fardeler plusieurs cultures, selon la revendication 1, **caractérisé par le fait que** la faucheuse (11) consiste en une structure oscillatoire (86) qui est également partagée par l'ensemble de javelage (12) et est composée par un ensemble de tubes carrés de longeron organisé en deux paires: sur le côté droit, 87A et 87B, et sur le côté gauche 88A et 88B; Sur chacun des côtés de l'ouverture 4, tous sont reliés de façon articulée sous la structure (1) comme un pendule, plus spécifiquement au-dessous des tubes (3), et, à cette fin, les roulements existent (26); Sur l'extrémité arrière de ces paires de tubes de longeron (87AB et 88AB), il sera possible de trouver de façon verticale et articulée, les structures de ressort reliées en spirale (89), qui à leur tour, ont leur extrémité supérieure soutenue par un bras de plaque en format de "V" allongé et fixé et étant une partie intégrante du support (26); Sur l'autre côté, l'extrémité frontale des paires de tube de longeron (87AB et 88AB) soutient la faucheuse réelle (11), composée par une pièce de plaque en métal allongée (91), fixée de façon rigide sur toutes les extrémités frontales des paires de tube de longeron (87AB et 88AB), et sur leur bord arrière, est située une pluralité de plaquettes de support (92), chacune d'entre elles étant fixée à la base d'une fourche à orientation inclinée (93), dont les extrémités sur le bord correspondent à l'ensemble de javelage (12); De la même façon, le bord arrière de cette pièce de plaque allongée (91) contient une pluralité de ciseaux équidistants fixes (94), parmi lesquels est placé en nombre et espacement égal, un ensemble de dents de coupe (95) qui sont tous fixés sur une pièce de plaque en métal oscillatoire (96), qui, à leur tour, a l'une de ses extrémités accouplée à un ensemble d'actionnement (97), composé initialement par un support de plaque d'équerre (98) fixé entre la pièce de la plaque (91) et le tube de longeron (88A), et sur sa partie supérieure, il existe un allongement en format de "T" vertical (99), deux plaques latérales (100), une base intermédiaire (101) et une base supérieure (102); Sur cette dernière, un moteur hydraulique est fixé (103), dont l'essieu avec l'accouplement élastique se trouve vers le bas et est accouplé à une boîte d'engrenage (104), au-dessous de laquelle son essieu est accouplé à un ensemble de came (105) qui, finalement, est annexé de façon articulée à la pièce de la plaque oscillatoire 96.

13. Outil pour cueillir et fardeler plusieurs cultures, selon la revendication 1, **caractérisé par le fait que** l'ensemble de javelage (12) est composé par deux courroies de transport, alignées de façon transversale (106), chacune d'entre elles étant assemblée sur une structure complémentaire (107) formée par des tubes en format de "Y", dont l' extrémité arrière unifiée est fixée de façon articulée au-dessous de la structure (1), tandis que ses extrémités frontales sont pliées en angle vers l'extérieur et soudées au tube de longeron correspondant (87AB ou 88AB); Dans cette position des tubes de longeron, il existe une paire de douilles de roulement (108), chaque paire pour un cylindre (109), positionné de façon parallèle à la paire correspondante des tubes de longeron (87AB ou 88AB) et couverte et enveloppée par la courroie (106), l'un de ces cylindres (109) est responsable par la traction et pour cela, en plus d'avoir un support complémentaire (110), il est accouplé à un moteur hydraulique (112) qui tourne ce dernier vers une direction contraire à sa contrepartie, de l'autre côté de la machine, de façon à ce que les deux courroies de transport se dirigent vers l'ouverture (4).
